# EUROPEAN PATENT SPECIFICATION

(11) **EP 1 666 275 B1**
(45) Date of publication and mention of the grant of the patent: **16.01.2008**
(21) Application number: 05023866.6
(22) Date of filing: 02.11.2005
(51) Int. Cl.: B60C 9/02, B29D 30/46, B60C 15/05, B60C 15/06, B60C 15/00

(54) **Pneumatic tire and producing method thereof**
Luftreifen und Verfahren zu seiner Herstellung
Pneumatique et son procédé de production

(30) Priority: 11.11.2004 JP 2004327989; 11.04.2005 JP 2005113656
(43) Date of publication of application: 07.06.2006
(73) Proprietor: SUMITOMO RUBBER INDUSTRIES, LTD., Kobe-shi, Hyogo-ken (JP)
(72) Inventor: Nakata, Norikatsu, 3-chome, Chuo-ku Kobe-shi Hyogo-ken (JP)
(74) Representative: Manitz, Finsterwald & Partner GbR

(56) References cited:
- EP-A- 0 928 702
- DE-A1- 1 729 587
- GB-A- 989 895
- US-A- 3 414 447
- US-A- 3 934 634
- US-A1- 2004 074 580
- PATENT ABSTRACTS OF JAPAN vol. 2003, no. 12, 5 December 2003 (2003-12-05) -& JP 2003 306009 A (BRIDGESTONE CORP), 28 October 2003 (2003-10-28)

## Description

### BACKGROUND OF THE INVENTION

The present invention relates to a pneumatic tire and a producing method thereof capable of improving uniformity.

A tire having the features of the preamble of claim 1 and a method having the features of the preamble of claims 7 and 8 are known, from GB 989 895 A.

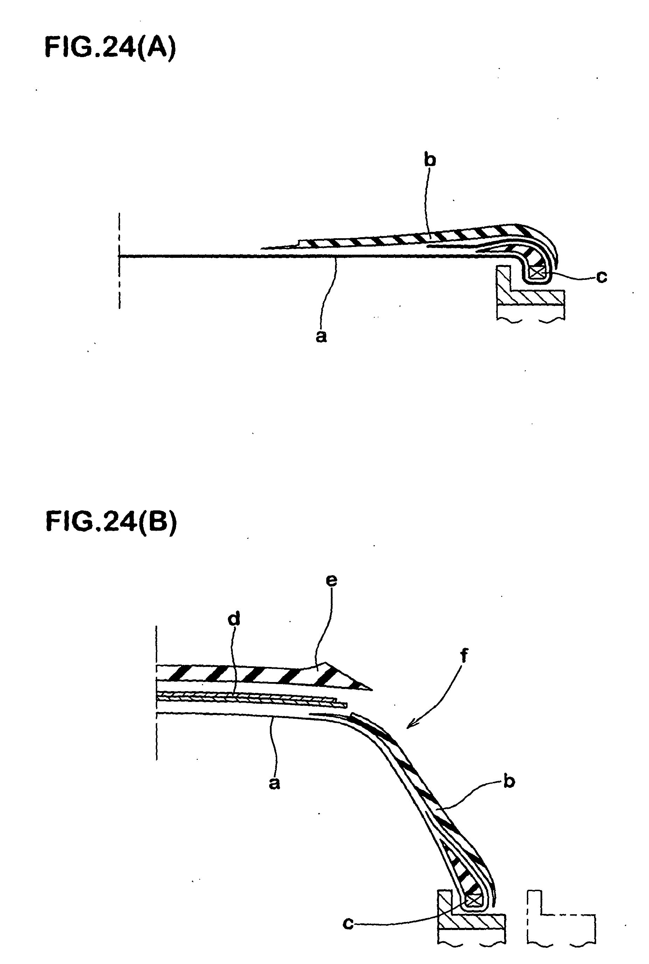

In a producing procedure of a conventional pneumatic radial tire, as shown in Fig. 24A, a cylindrically wound carcass ply a is prepared first. Each end of the carcass ply a is folded back around a bead core c, and a sidewall rubber b is pasted on each of two sidewall regions of the carcass ply a. Then, as shown in Fig. 24B, the carcass ply a is expanded and deformed in a toroidal form while reducing a gap between the bead cores c. With this, a ring-like belt layer d and a tread rubber e which are previously on standby are pasted on a tread region of the carcass ply a, so as to be integrated into a raw cover f. Through such an expansion and deformation procedure, an aperture in a row of carcass cords of the carcass ply a is produced at the tread portion and its end is reduced. The reduction of the end is not uniform in the circumferential direction of the tire and is prone to be varied due to variation in thickness of the topping rubber in the bias joint portion or splice portion of the carcass ply.

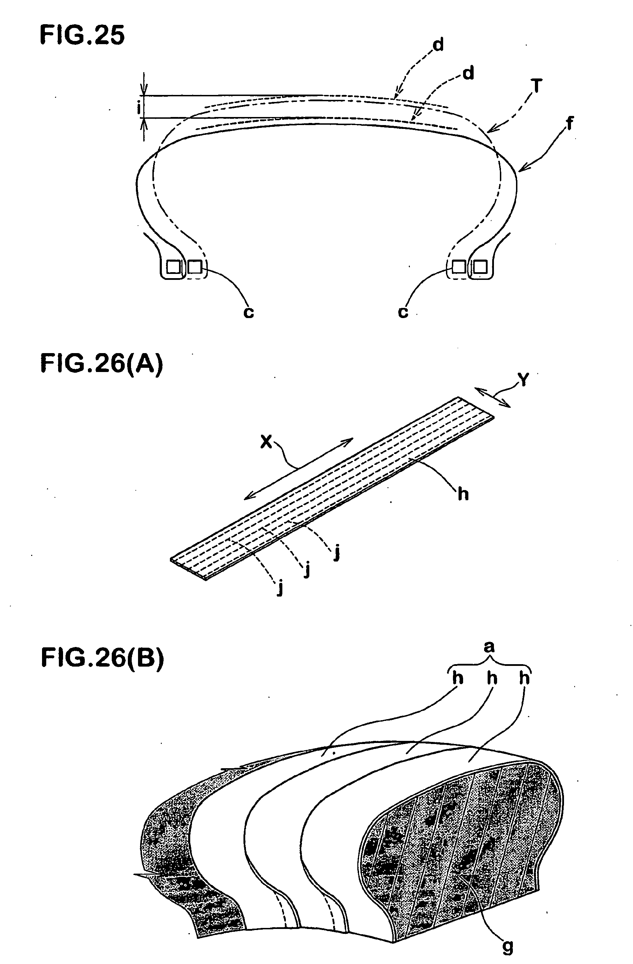

As shown in Fig. 25, the raw cover f has a smaller outer diameter as compared with a finished tire. Thus, at the time of vulcanization and formation, a relatively large stretch i is given to the rubber and cord. This stretch i reduces an angle with respect to a tire equator of a belt cord of the belt layer. Although the belt layer d is formed while taking into consideration the variation of belt cord angle caused by the stretch i, the angle is locally varied since the pressure distribution at the time of vulcanization can not be completely equalized.

Such variations of the end of the carcass cord and the belt cord angle deteriorate the uniformity, and generates various forces (force variations) which are not supposed to be generated when a vehicle runs. The force variations increase the vibration and noise at the time of running, and deteriorate the steering performance.

In recent years, to prevent such drawbacks, Japanese published patent application H11-254906 proposes a producing method of a pneumatic tire using a shaping body having an outer peripheral surface similar to a tire inner surface shape when internal pressure is charged thereinto. More specifically, an inner liner, a carcass ply, an inexpansible bead, a belt, a tread rubber and a sidewall rubber are pasted on an outer side of the shaping body, thereby forming a raw cover. This method does not have the above-described expansion and deformation procedure of the carcass ply.

In the producing method of the tire using the shaping body, it is generally necessary to deform a rectangular or parallelogram flat carcass ply into a toroidal three dimensional shape. To this end, the technique disclosed in the the prior art uses a plurality of strip pieces h having a size X which is long in a radial direction of the tire as compared with a length Y in the circumferential direction of the tire as shown in Fig. 26A. The prior art describes that the strip pieces h are linked in the circumferential direction of the tire outside of the shaping body g shown in Fig. 26B, thereby forming a three dimensional carcass ply a. The strip pieces h are of rectangular shape. Each strip piece h is a piece of unvulcanized topping rubber having a plurality of carcass cords j extending from one bead portion to the other bead portion therein. The bead portions of a strip piece h respectively overlap with the bead portions of the adjacent strip pieces h.

However, positioning the long rectangular strip pieces h precisely without gaps is difficult and requires expensive equipment. Especially in a tread portion, variations are prone to be generated in the ends of the carcass cords j depending on pasting precision of the strip pieces h. Further, positions of the strip pieces h in the radial direction are not stabilized easily. In other words, the positions of ends of the strip pieces h on the side of the bead portions are prone to be varied.

Japanese published patent application H7-215007 discloses a carcass ply which is formed by knitting a carcass cord in a form of loop between a cord bundle disposed in a bead portion and a cord bundle disposed in the other bead portion, instead of using the flat carcass ply. Manufacturing such a carcass ply makes the producing procedure and producing equipment complicated, and productivity is inferior.

### BRIEF SUMMARY OF THE INVENTION

The present invention has been designed to solve such a problem, and it is an obj ect of the invention to provide a pneumatic tire in which variation of ends of a carcass cord in a tread portion is small and which can efficiently be produced, and to provide a producing method of such a pneumatic tire.

To this end, it is a base of the invention that the carcass ply includes a center ply portion which is continuously wound around the tread portion in the circumferential direction of the tire, and long rectangular ply portions, on both sides of the center ply portion. The long rectangular ply portions are provided for forming sidewall portions and bead portions. That is, the center ply portion is wound around the tread portion in the circumferential direction of the tire, and its beginning end and terminating end are lap jointed to each other. The long rectangular ply portions include long rectangular pieces that are continuously provided along the both sides of the center ply portion in the circumferential direction. The long rectangular pieces are formed by cutting the topping rubber from the both sides of the carcass ply to the center ply portion so as to provide slits in the radial direction. The long rectangular pieces form side portions of the carcass by bending the long rectangular pieces radially inward along the shape of the sidewall portions while overlapping with the adjacent long rectangular pieces.

With the pneumatic tire of the present invention, a toroidal carcass may be formed without through the conventional expanding and deforming procedure. Further, since the carcass is wound around the tread portion in the circumferential direction of the tire and the beginning end and the terminating end are lap jointed to each other, it is possible to equalize the ends of the carcass cord in the circumferential direction of the tire while preventing the productivity from being deteriorated, and to provide a pneumatic tire having excellent uniformity.

In the producing method of the pneumatic tire, the carcass forming procedure for forming the toroidal carcass includes a step for supplying a carcass ply having the slits to the shaping body, a step for lap jointing the both ends of the ply, and a step for bending the long rectangular pieces.

As for the method invention, the carcass is formed into the toroidal shape without using the expanding and deforming procedure unlike the conventional technique even if the carcass ply is wound in the tread portion in the circumferential direction of the tire and the beginning end and the terminating end are lap jointed to each other. Therefore, especially in the tread portion, this is of help in equalizing the ends of the carcass cord in the circumferential direction of the tire. Further, the pasting procedure of the carcass ply can be simplified, and it is possible to prevent the productivity from being deteriorated. Further, the stretch at the time of vulcanization can be reduced extremely. As a result, the producing method of the pneumatic tire can reduce the variation in cord angle at the belt layer and to enhance the uniformity.

### BRIEF DESCRIPTION OF THE SEVERAL VIEWS OF THE DRAWINGS

Fig. 1 is a sectional view of a pneumatic tire according to an embodiment of the present invention;
Fig. 2 is a partially cut-away perspective view of the pneumatic tire;
Fig. 3 is a plan view showing one example of a carcass ply before it is formed;
Fig. 4 is a side view showing one example of the carcass ply after it is formed;
Fig. 5 is a sectional view of the carcass ply taken along the line A-A in Fig. 4;
Fig. 6 is a sectional view of the carcass ply taken along the line B-B in Fig. 4;

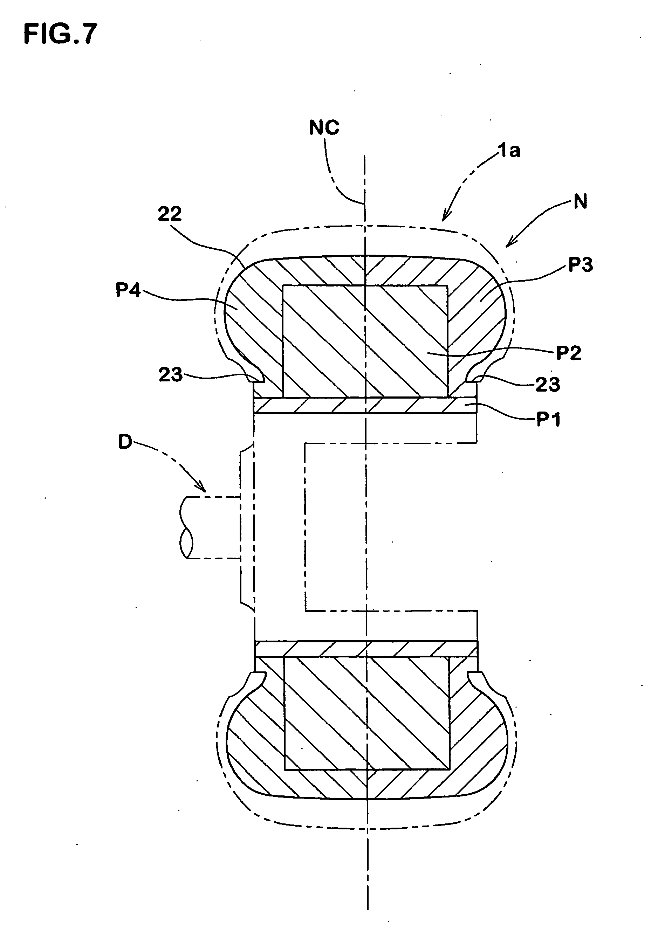

Fig. 7 is a sectional view of a shaping body;
Fig. 8 is a sectional view of the shaping body around which an inner liner is wound;
Fig. 9 is a partial sectional view of the shaping body in which bead core and the like are disposed;
Fig. 10 is a perspective view of a rubber strip;
Fig. 11 is a perspective view showing another embodiment of the bead core;
Fig. 12 is a schematic side view used for explaining a forming step and a supplying step of the carcass ply;
Fig. 13 is a perspective view showing a device for producing cut slits to the carcass ply;
Fig. 14 is a perspective view used for explaining a forming procedure of the carcass ply;
Fig. 15 is a perspective view used for explaining the forming procedure of the carcass ply;
Fig. 16 is a perspective view used for explaining the forming procedure of the carcass ply;
Fig. 17 is a side view showing another embodiment of the carcass ply after it is formed;
Fig. 18 is a schematic side view used for explaining another forming method of the carcass ply;
Figs. 19A to 19E are flowcharts showing the embodiment of the forming step of the carcass;
Fig. 20 is a sectional view showing another embodiment for forming a slit in the carcass ply;
Fig. 21 is a sectional view of the shaping body with a raw cover formed thereon;
Fig. 22 is a partial sectional view used for explaining a vulcanizing and forming step;
Fig. 23 is a plan view showing another example of the carcass ply before it is formed;
Figs. 24A and 24B are schematic sectional views used for explaining conventional expanding and deforming step;
Fig. 25 is a schematic diagram used for explaining a stretch; and
Figs. 26A and 26B are diagrams used for explaining a conventional producing method using a shaping body, wherein Fig. 26A is a perspective view of strip pieces that form a carcass ply; and Fig. 26B is a partial perspective view showing the strip pieces h pasted on the shaping body.

### DETAILED DESCRIPTION OF THE INVENTION

An embodiment of the present invention will be explained based on the drawings below.

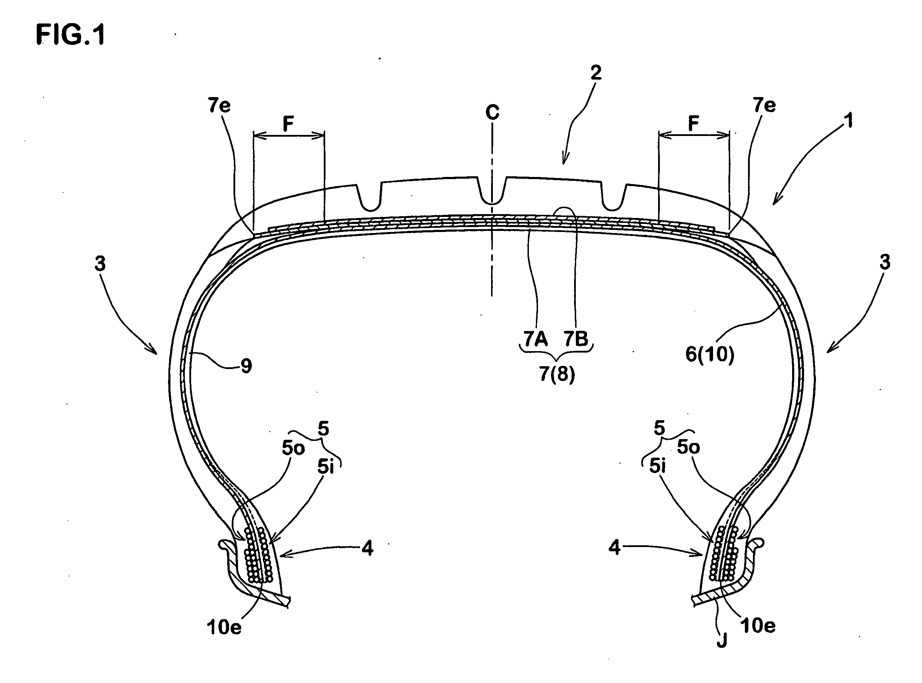

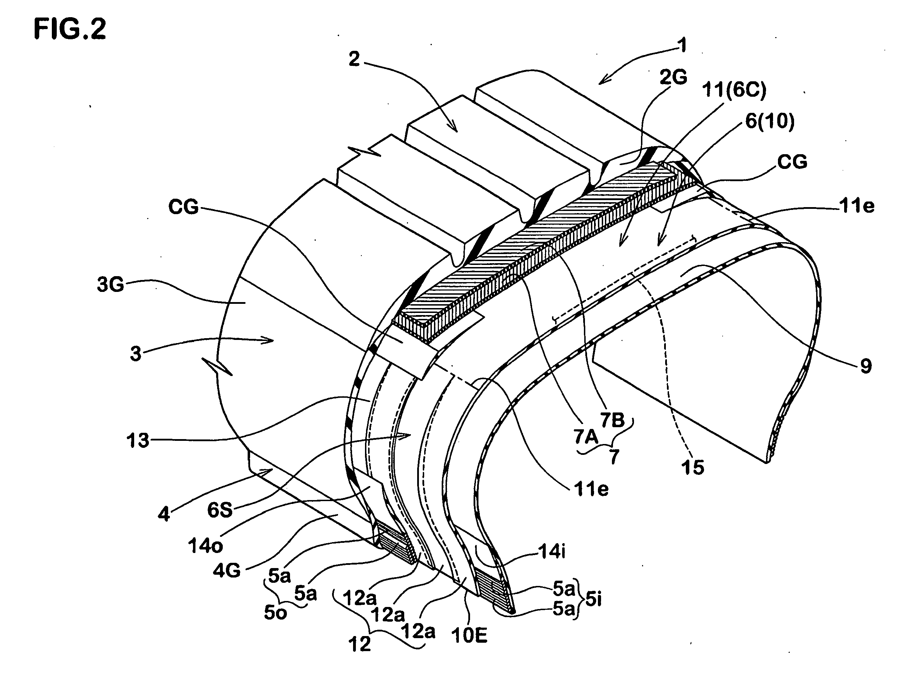

Fig. 1 is a sectional view of tire meridian including a tire axis of a pneumatic tire 1 of the embodiment. Fig. 2 is a partially cut-away perspective view of the pneumatic tire 1. Fig. 1 shows a normal state in which the pneumatic tire 1 is assembled to a normal rim J, normal internal pressure is charged into the tire, and no load is applied to the tire.

Here, the "normal rim" is a rim determined for each tire by a standard on which the tire is based. For example, the normal rim is a standard rim in the case of JATMA, a "Design Rim" in the case of TRA, and a "Measuring Rim" in the case of ETRTO. Further, the "normal internal pressure" means an air pressure determined for each tire by the standard. The "normal internal pressure" is a maximum air pressure in JATMA, a maximum value described in a table of "TIRE LOAD LIMITS AT VARIOUS COLD INFLATION PRESSURES" in the case of TRA, and "INFLATION PRESSURE" in the case of ETRTO. When the tire is for a passenger vehicle, however, the normal internal pressure is 180KPa.

The pneumatic tire 1 includes a carcass 6 extending from a tread portion 2 to bead portions 4 and 4 on opposite sides respectively through sidewall portions 3, and a tread reinforcing layer 8 having a belt layer 7 disposed inward of the tread portion 2 and outward of the carcass 6 in the radial direction of the tire. An inner liner 9 made of rubber having excellent air-non-permeability is disposed on an inner surface of the tire. The pneumatic tire 1 is shown as an example of tubeless tires for a passenger car.

In this embodiment, the tread reinforcing layer 8 is formed only of the belt layer 7. The belt layer 7 includes two belt plies 7A and 7B each having steel cords coated with a topping rubber. The belt cords are at an angle of 15° to 40° with respect to a tire equator C, and the belt plies 7A and 7B are positioned such that the belt cords of one of the belt plies intersect with the belt cords of the other. The tread reinforcing layer 8 may include not only the belt layer 7, but also a band layer (not shown in the drawing) having cords extending along the circumferential direction of the tire, for example.

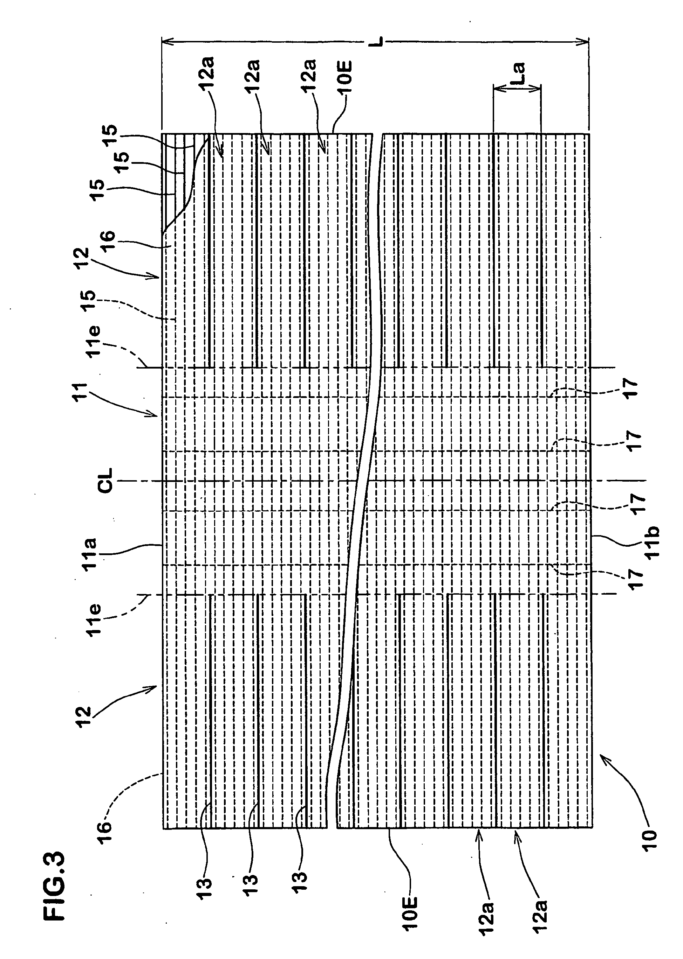

In this embodiment, the carcass 6 is formed of one carcass ply 10 having radially arranged (seen from the front) carcass cords. The radially arranged carcass cords include carcass cords arranged at an angle of 75 to 90° with respect to the tire equator C, that is an angle of 0 to 15° with respect to the meridian plane including the tire axis. Fig. 3 is a plan view of the unvulcanized carcass ply 10 before it is formed. The carcass ply 10 is formed such that carcass cords 15 are aligned in parallel at a constant pitch to form an arranged body, and both surfaces thereof are coated with a topping rubber 16. In this embodiment, the carcass ply 10 is formed into a rectangular shape. Material for the carcass cords 15 is not especially limited, but it is preferable to use organic fiber cords such as nylon, rayon, polyester, aromatic polyamide, polyethylene-2 and 6-naphthalete. The carcass cords 15 of this embodiment are continuous between the both side lines 10E and 10E of the carcass ply 10. In this embodiment, the carcass cords 15 extend in parallel to a widthwise direction of the ply (substantially at an angle of 90° with respect to the width center line CL).

The carcass ply 10 includes a center ply portion 11 and long rectangular ply portions 12 and 12 on opposite sides of the center ply portion 11.

The center ply portion 11 is wound in the circumferential direction of the tire in the tread portion 2 of the pneumatic tire 1, and its beginning end 11a and terminating end 11b in the circumferential direction of the tire are jointed to each other. With this lap joint, the center ply portion 11 is formed into a ring-like shape which is continuous in the circumferential direction of the tire. In other words, the center ply portion 11 is connected by the topping rubber 16 and has such a length L in the circumferential direction of the tire that the center ply portion 11 can be wound at least once and jointed to each other. This "lap joint" not only includes a mode in which the beginning end 11a and the terminating end 11b are superposed on each other with a superposing margin for overlapping in the radial direction of the tire, but also includes a mode in which end surfaces of the beginning end and the terminating end 11b are butted against and jointed to each other such that the superposing margin is substantially zero.

The center ply portion 11 of this embodiment includes continuous wefts 17 which extend from the beginning end 11a to the terminating end 11b in a direction perpendicular to the carcass cords 15. The wefts 17 are woven between the carcass cords 15 such that the weft 17 comes into and out from one surface and the other surface of the arranged body of the carcass cords 15 alternately. Such wefts 17 constitute tire fabric together with the carcass cords 15, and are of help in keeping ends of the carcass cords 15 constant. Like conventional examples, it is preferable to use one or more thin strings made of such as organic fibers as one or more wefts 17. In the case of this embodiment, more than one weft 17 are provided.

The long rectangular ply portions 12 each include a plurality of long rectangular pieces 12a arranged in the circumferential direction. The long rectangular pieces 12a are formed by cutting the topping rubber 16 to form slits 13 extending from each side line 10E in the widthwise direction of the carcass ply 10 to the center ply portion 11. In this embodiment, the slits 13 substantially do not have a width in the topping rubber 16 between the carcass cords 15. Thus, the long rectangular pieces 12a are of a laterally long rectangular shape, and connected to a side line 11e of the center ply portion 11. An interval between two slits 13, in other words, a length La of each long rectangular piece 12a in a direction perpendicular to the carcass cords 15 is set substantially the same. More specifically, it is preferable that the length La of the long rectangular piece 12a in the circumferential direction of the tire is obtained by dividing the length L of the center ply portion 11 in the circumferential direction of the tire into substantially equal parts. When the beginning end 11a and the terminating end 11b are butted against and jointed to each other, the length La is set to such a value that is obtained by dividing the length L into equal parts.

As shown in Fig. 2, the center ply portion 11 of the carcass ply 10 forms a central portion 6C of the carcass 6. In this embodiment, the center ply portion 11 is disposed in the tread portion 2 such that the carcass cords 15 are substantially 90° with respect to the tire equator C. The long rectangular ply portions 12 are bent radially inward along the shape of the sidewall portion 3 so that the adjacent long rectangular pieces 12a overlap each other. With this, the long rectangular ply portion 12 can form the side portion 6S of the carcass 6 having a smoothly curved profile in the tire meridian cross section.

As shown in Figs. 2, 4 and 14 to 16, in the side portion 6S of the carcass 6 of this embodiment, the long rectangular pieces 12a of each long rectangular ply portions 12 include long rectangular pieces 12a1 and long rectangular pieces 12a2 which are alternately arranged. The long rectangular pieces 12a1 are bent radially inward prior to the long rectangular pieces 12a2. The long rectangular pieces 12a2 are then bent radially inward of the tire, and are pasted on outer surfaces of the long rectangular pieces 12a1 in the axial direction of the tire. When bending the long rectangular pieces alternately in this manner, the length La of the long rectangular piece 12a is set to such a value that divides the length L of the center ply portion 11 in the circumferential direction into an even number of the substantially equal parts. The long rectangular pieces 12a can be bent in succession in the circumferential direction such that one side end and the other side end are superposed and the one side end comes inside and the other side end comes outside.

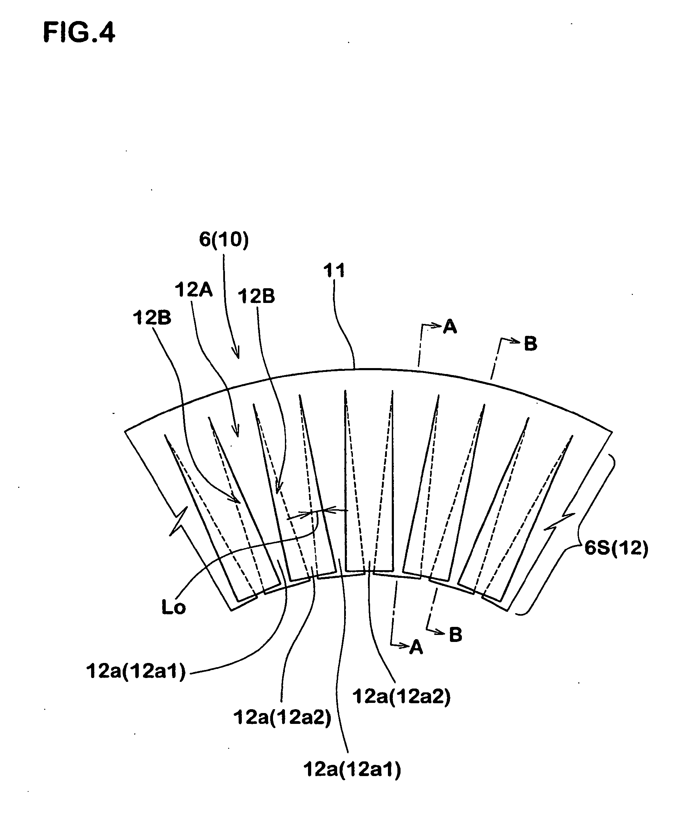

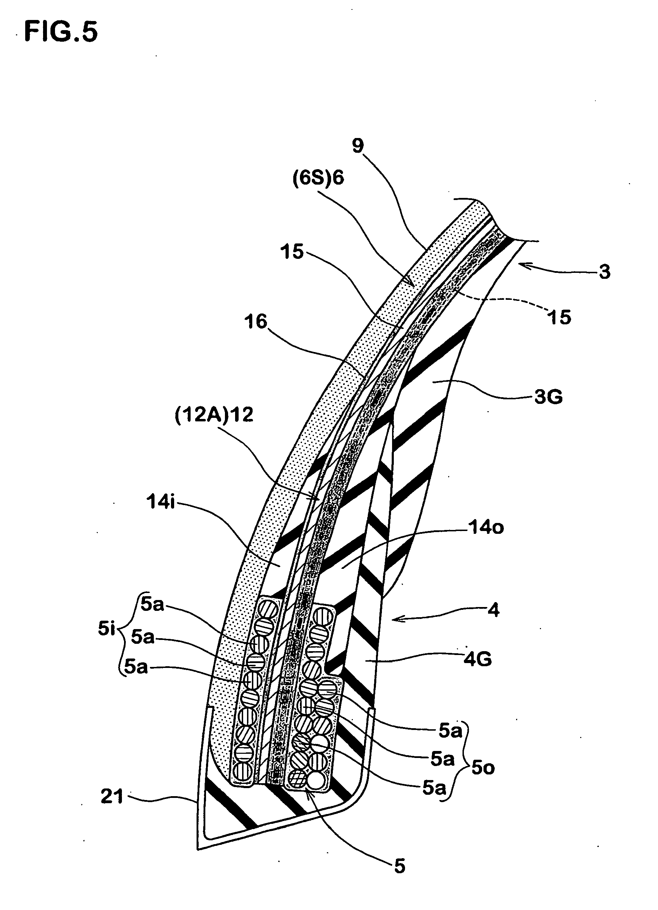

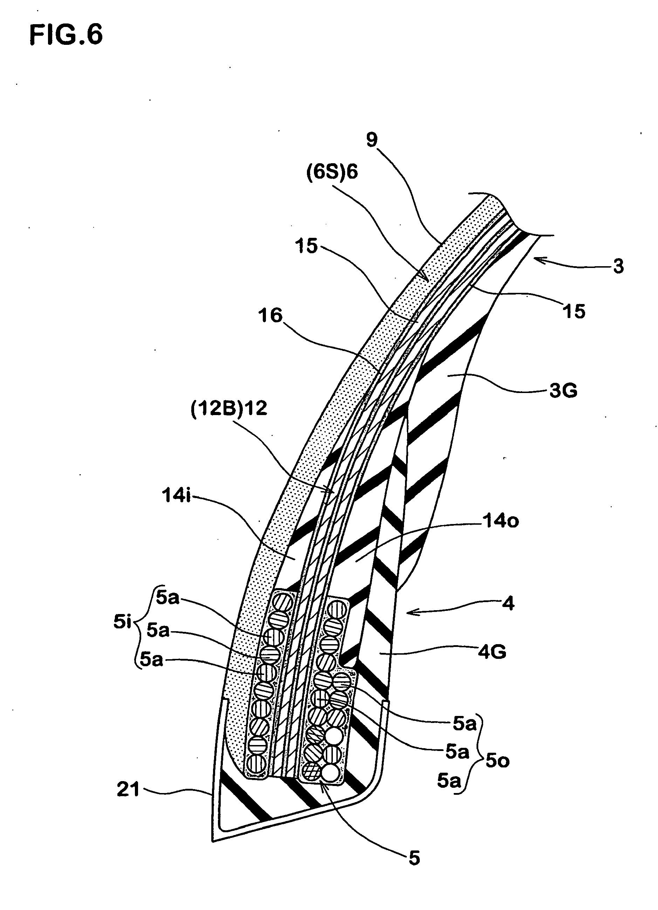

Fig. 5 is a sectional view of the carcass ply taken along the line A-A in Fig. 4, and Fig. 6 is a sectional view of the carcass ply taken along the line B-B in Fig. 4. As apparent from Figs. 5 and 6, the long rectangular ply portions 12 of this embodiment include non-superposed portions 12A where long rectangular pieces 12a which are adjacent each other in the circumferential direction of the tire are not superposed, and superposed portions 12B where the long rectangular pieces 12a which are adjacent each other in the circumferential direction of the tire are superposed. Each non-superposed portion 12A is constituted by one layer of the carcass cord 16. Each superposed portion 12B is constituted by two layers of the carcass cord 16. The non-superposed portions 12A and the superposed portions 12B are alternately provided in the circumferential direction of the tire. Therefore, the length La of the long rectangular piece 12a in the circumferential direction of the tire is set to such a value that divides the length L of the center ply portion 11 in the circumferential direction into an even number of the substantially equal parts.

The long rectangular ply portion 12 becomes greater as the length Lo of the superposed portion 12B in the circumferential direction of the tire radially comes more inward of the tire. With this, the disposition density of the carcass cords is increased at a location closer to the bead portion 4, and the bending rigidity can be enhanced. This is of help in enhancing the steering stability.

The carcass ply 10 is formed into a toroidal shape without through the expanding and deforming procedure from a cylindrical shape to a toroidal shape unlike the conventional technique. Thus, the ends (number of the cord per 5 cm) of the carcass cords 15, especially ends of the tread portion 2 are not arisen. Hence, the ends can be equalized in the circumferential direction of the tire, and this is of help in obtaining pneumatic tire 1 having excellent uniformity. Since the center ply portion 11 of the carcass ply 10 is wound around the tread portion 2 and has a length which is continuous in the circumferential direction of the tire by the lap joint, it is possible to prevent the productivity from being lowered.

If the width of the center ply portion 11 in the axial direction of the tire is excessively large, crease is generated at the time of formation in a position where the outer diameter of a shoulder portion or a sidewall portion is largely deformed, and there is a tendency that a smooth carcass profile can not be obtained. If the width of the center ply portion 11 becomes small on the other hand, the length of the long rectangular piece 12a is increased. This makes it difficult to equalize the superposed amount in the circumferential direction of the tire at the time of formation, and variations in the side portion 6S of the carcass 6 are prone to be generated. From such a point of view, it is preferable that the side line 11e of the center ply portion 11 substantially matches with a range where a cushion rubber CG (shown in Fig. 1) is disposed. The section of the cushion rubber CG is of shape of a slightly elevated triangle, and vertex thereof is located at the side line 7e of the belt layer 7, in the embodiment. It is preferable that the side line 11e of the center ply portion 11 is located in a region F between an outer end 7e of the belt layer 7 in the axial direction of the tire and a location away from the outer end 7e by 20 mm, more preferably 15 mm axially inward of the tire.

If the length La of the long rectangular piece 12a is excessively large, crease is prone to be generated when the adjacent long rectangular pieces 12a are superposed along the shape of the sidewall portion 3, and if the length La is excessively small, it becomes difficult to precisely bend the long rectangular pieces 12a radially, and there is an adverse possibility that the uniformity is deteriorated. From such a point of view, it is preferable that the length La is 10 to 30 mm in the long rectangular ply portion 12 of each side. This length La is a length of the long rectangular pieces 12a in the circumferential direction of the tire.

The ends of the long rectangular pieces 12a in the radial direction, i.e., the side line 10E of the carcass ply 10 is terminated at the bead portion 4. In this embodiment, the side line 10E of the carcass ply 10 is not folded back radially outward of the tire, and is cut radially inward of the tire.

Each bead portion 4 is provided with a bead core 5 on at least one of inner and outer surfaces of the long rectangular piece 12a in the axial direction of the tire. The bead core 5 of this embodiment includes an inner bead core 5i disposed on an inner surface of the long rectangular piece 12a in the axial direction of the tire and an outer bead core 5o disposed on an outer surface of the long rectangular piece 12a in the axial direction of the tire. The bead core 5 sandwiches the long rectangular piece 12a from inner and outer surfaces in the axial direction of the tire, and this helps with prevention of a so-called pass-through of the carcass ply 10 and improvement of durability.

The inner bead core 5i and the outer bead core 5o are formed by winding an inexpansible bead wire 5a in the circumferential direction of the tire at least once ormore, and in this embodiment, a plurality of times. A steel cord, a steel wire, an aromatic polyamide cord and the like are suitable as the inexpansible bead wire 5a. The inner bead core 5i is formed in a shape of vortex by spirally winding one continuously supplied bead wire 5a around a rotation shaft of the tire and laminating the same in the radial direction of the tire. Similarly, the outer bead core 5o is formed in vortical form by spirally winding the bead wire 5a in the radial direction of the tire.

It is preferable that the number of wires used for the outer bead core 5o is higher than that of the inner bead core 5i, and the outer bead core 5o has higher rigidity although the invention is not limited to this. More specifically, it is preferable that the total area of cross section of the bead wire 5a of the outer bead core 5o is about 1.2 to 2.0 times of the total area of cross section of the bead wire 5a of the inner bead core 5i. With this, high rigidity can be obtained by the outer bead core 5o in the bead portion 4 on the outside of turning and running motion, and this is of help in enhancing the steering stability.

As shown in Figs. 5 and 6, the bead portion 4 is provided with inner and outer apexes 14i and 140 extending radially outward of the tire from outer surfaces of the inner and outer bead cores 5i and 5o in the radial direction of the tire in a taper manner. It is preferable that JIS durometer A hardness of each of the inner and outer apexes 14i and 14o is 80° or higher, and more preferably 90° or higher, and the upper limit thereof is less than 100°, and more preferably 98° or less. The apexes 14i and 14o are adhered to the topping rubber 16 of the carcass ply 10. The apexes 14i and 14o enhance the bending rigidity of the bead portion 4, and are of help in enhancing the steering stability. To prevent the wear caused by contact with the rim J, a clinch rubber 4G and a chafer 21 made of hard rubber are provided.

An embodiment of a producing method of the pneumatic tire 1 having the above configuration will be explained. This producing method includes a step for forming a raw cover, and a step for vulcanizing the raw cover. The step for forming the raw cover is carried out using a shaping body N.

The shaping body N of this embodiment includes a three dimensional outer peripheral surface 22 closer to an inner surface shape of the tire when 5% internal pressure is charged into the tire, and a pair of flange surfaces 23 which are connected to ends of the outer peripheral surface 22 on the side of the beads and which extend axially outward. The inner surface shape of the tire mentioned here is an inner surface shape of the tire to be produced from this time on, and "when 5% internal pressure is charged" means that the internal pressure is reduced to 5% of a normal internal pressure from the normal state. Generally, the cross section shape of the tire when 5% internal pressure is charged is extremely close to a cross section shape of the tire in the vulcanization mold. Thus, by bringing the outer peripheral surface 22 of the shaping body into a shape close to the inner surface shape of the tire when 5% internal pressure is charged, the stretch which is extension of the raw cover at the time of vulcanization and formation can be reduced.

The shaping body N of the embodiment is an assembly formed of a plurality of division pieces P1 to P4 which can be divided in the circumferential direction of the tire. Thus, after the raw cover 1a is formed outside of the shaping body N, the division pieces P1 to P4 can be decomposed and taken out in a predetermined order from the raw cover 1a. The shaping body N is not limited to the assembly as in this embodiment, and various types of shaping bodies can be employed such as an expansion and shrinkage type using fluid pressure, and a drum type capable of increasing or reducing in diameter in the radial direction of the tire only if the outer peripheral surface 22 has such a rigidity that it is not substantially deformed during formation of the raw cover. The shaping body N of the embodiment is rotatably supported by a support shaft D in a cantilever manner. When the assembly type shaping body N is vulcanized together with the raw cover, metal material such as Duralumin capable of withstanding heat and pressure at the time of vulcanization is preferable. When the raw cover is removed from the shaping body N prior to the vulcanization, material such as synthetic resin having excellent handling properties, especially chemical wood is preferable as the shaping body N.

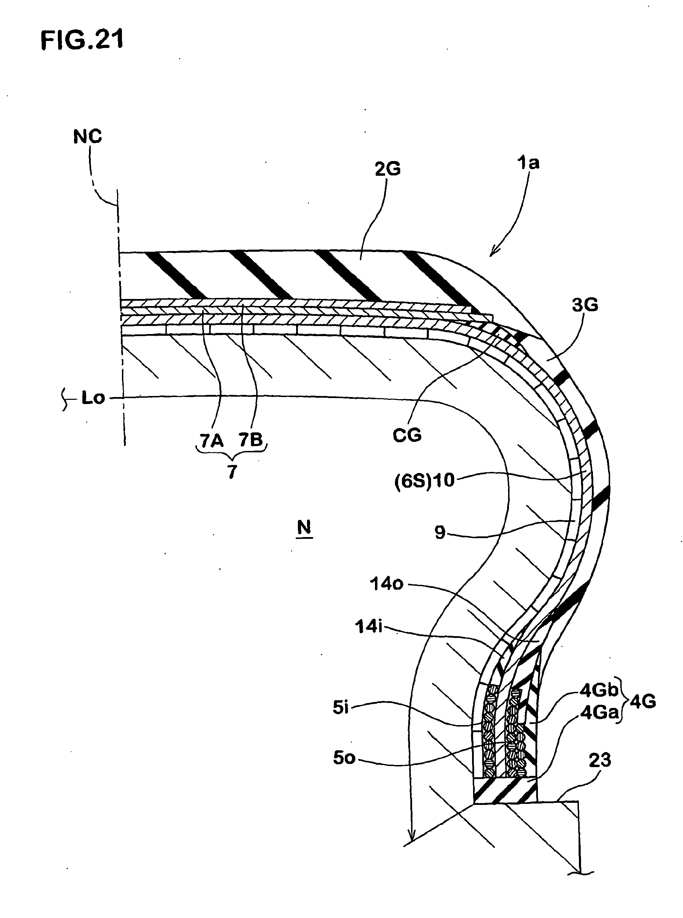

The step for forming the raw cover 1a (shown in Fig. 21) in this embodiment includes a step for pasting a base 4Ga of the clinch rubber 4G and the inner liner 9 on an outer side of the shaping body N. The base 4Ga of the clinch rubber 4G has a rectangular cross section, and is wound around the flange surface 23 in a ring form.

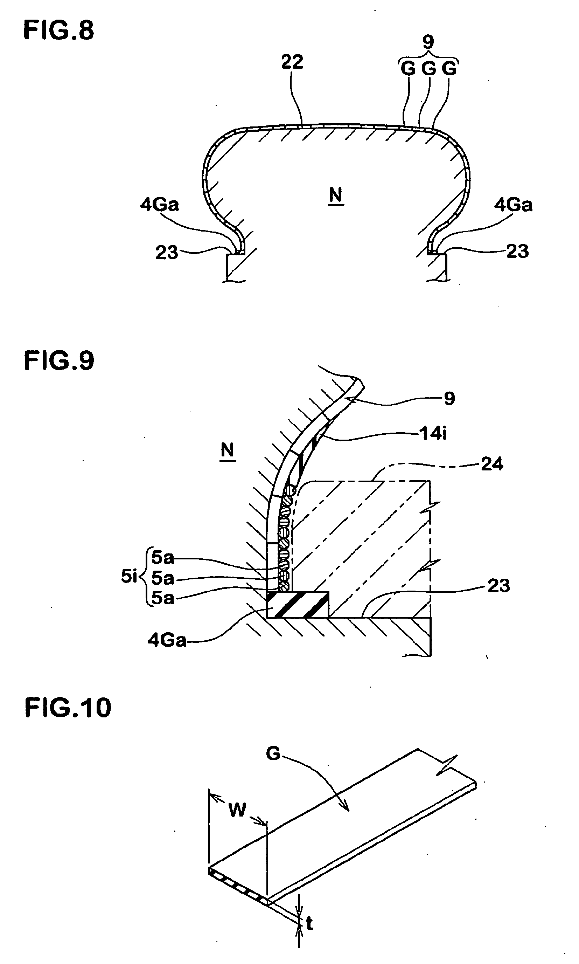

As shown in Fig. 10, the inner liner 9 is formed by winding an unvulcanized rubber strip G circumferentially around the outer peripheral surface 22 of the shaping body N while deviating the side line in the meridian direction. The rubber strip G is of a ribbon shape having a width W of about 5 to 35 mm, and thickness t of about 0.5 to 2.0 mm.

When winding, one end of the rubber strip G is pasted on the outer peripheral surface 22 of the shaping body N. Then, the shaping body N is turned by the support shaft D, and the rubber strip G is moved at a predetermined pitch in the radial direction at the sidewall portion. At the sidewall portion, a spiral inner liner portion in shape of a vortex is formed. As shown in Fig. 8, at a portion (e.g., the entire region) of the outer peripheral surface 22 of the shaping body N, the rubber strip G is deviated in position in toward the rotation shaft, and the spiral inner liner portion can be formed at the tread portion. Such a rubber member forming method is generally called a strip wind method, and this method is suitable for forming a complicated three dimensional shape. To form the inner liner 9, it is possible to wind a wide rubber sheet around the tread region, and the side portions on opposite sides thereof by the strip wind method. One rubber strip G can be wound around the entire body, or a plurality of rubber strips G may be wound from a plurality of locations at the same time.

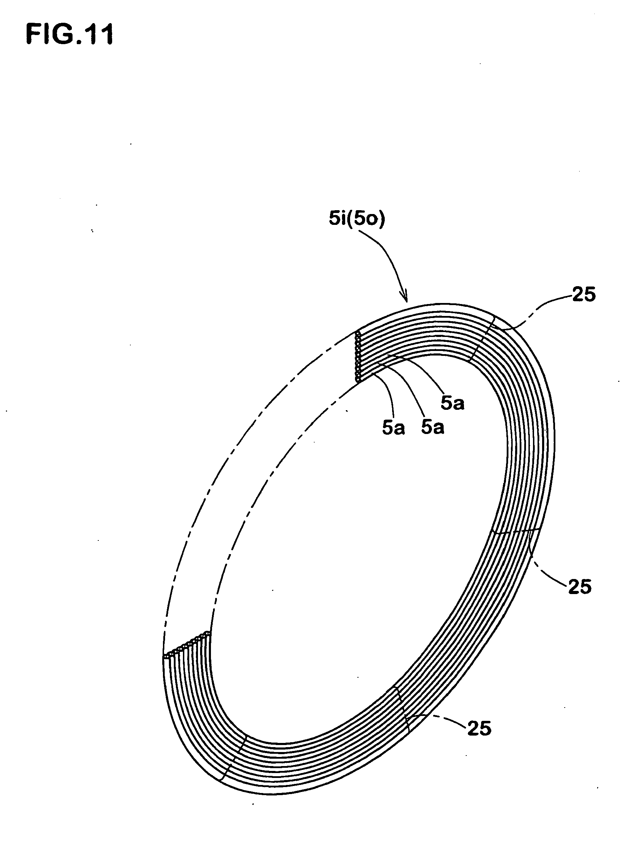

Next, in the embodiment, the inner bead core 5i is formed outside of the inner liner 9 of the bead region as shown in Fig. 9. In this step, the inner bead core 5i is formed by spirally winding one bead wire 5a which is continuously supplied a plurality of times such that the bead wire 5a is superposed in the radial direction of the tire from the base 4Ga. When the bead wire 5a is wound, it is preferable that a ring-like patch 24 capable of forming a small gap between the outer surface of the inner liner 9 is mounted on the flange surface 23. As shown in Fig. 11, a bundle body formed by previously bundling the bead wire 5a with a winding lashing 25 in another step is used as the bead wire 5a.

Then, a step for disposing the inner apex 14i outside of the inner bead core 5i in the radial direction of the tire is carried out. The inner apex 14i presses the inner bead core 5i from outside to prevent the inner bead core 5i from being deformed.

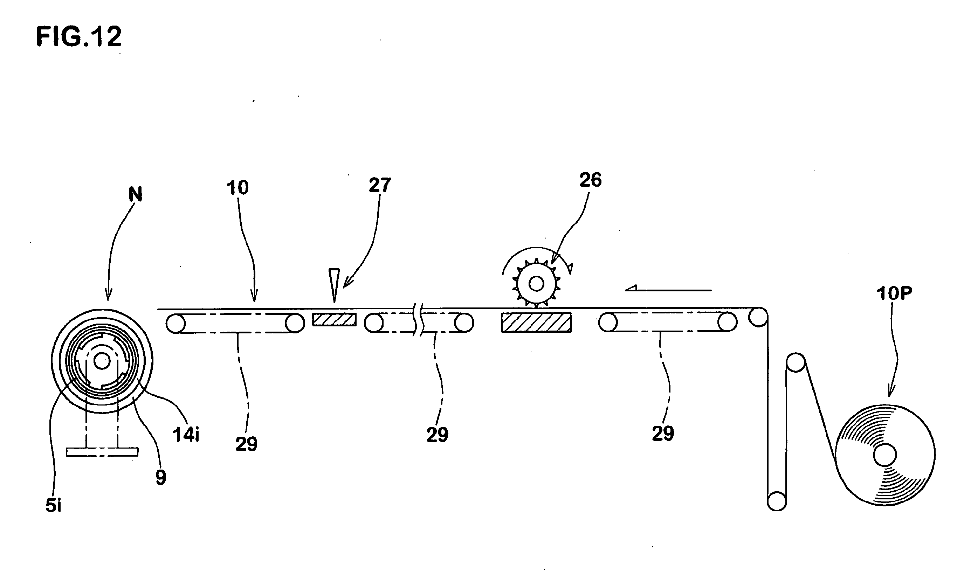

Next, in this embodiment, a step for supplying the carcass ply 10 in which the center ply portion 11 and the long rectangular ply portion 12 are divided to the shaping body N is carried out. In this embodiment, as shown in Fig. 12, the carcass ply 10 formed with the slits 13 is formed from a standard ply 10P which is stocked in a form of yard goods and which is not provided with the slits 13. The standard ply 10P is continuously wound out onto a conveyer 29 for example, and in the transferring procedure, the slits 13 are formed by a first cutting tool 26 and then, and cut into a predetermined length in the circumferential direction by a second cutting tool 27. With this, the carcass ply 10 is formed. The carcass ply 10 is supplied to the shaping body N provided downstream of the second cutting tool 27 through the conveyer 29, and is wound around its outer side.

As seen in Fig.12, a pair of roller cutters are available disposed on opposite sides of the carcass ply 10 as the first cutting tool 26. Each roller cutter has cutting blades disposed at a predetermined pitch in the circumferential direction. The roller cutters are pushed against the passing standard ply 10P while rotating the roller cutters, and the slits 13 are formed in the standard ply 10P at predetermined pitches.

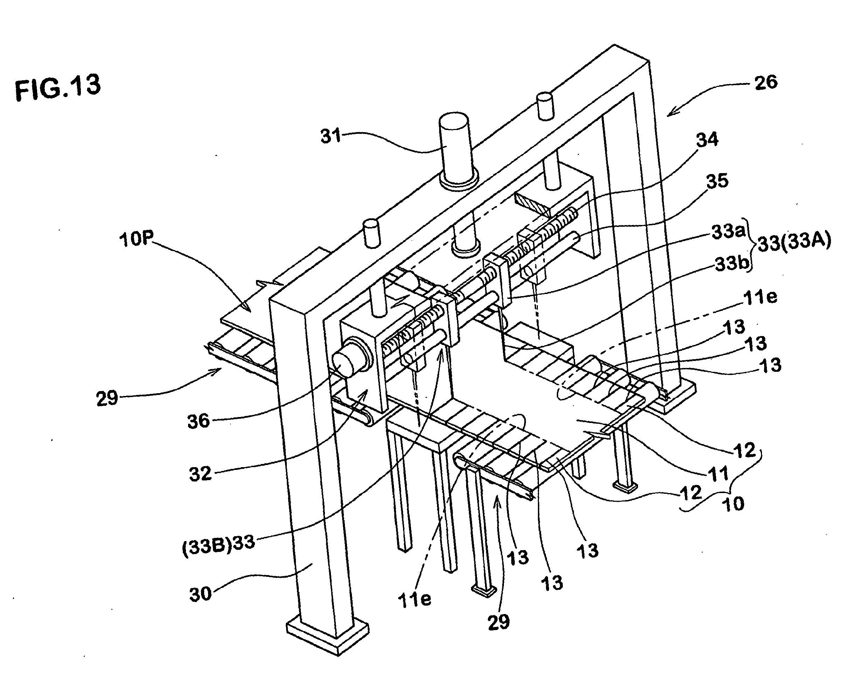

The first cutting tool 26 is not limited to the above embodiment. For example, Fig. 13 shows another example of the first cutting tool 26. The first cutting tool 26 of this embodiment includes a gate-like frame body 30, a movable frame 32 capable of vertically moving with respect to the frame body 30 by a cylinder 31, and a slide cutter 33 which is provided on the cutting frame 32 and which can move in the widthwise direction of the standard ply 10P.

The frame body 30 is disposed in a direction in which the frame body 30 extends over the conveyer 29 which moves the standard ply 10P. The movable frame 32 extends in the widthwise direction of the standard ply 10P, and in this embodiment, the movable frame 32 is provided with a screw shaft 34 and a guide shaft 35 which extend horizontally and in parallel to each other. The screw shaft 34 is formed at its one end with a right screw portion and at its other end with a left screw portion. The screw shaft 34 is rotated in a predetermined direction by an electric motor 36.

The slide cutter 33 includes a left and right pair of cutters 33A and 33B, and each cutter includes a slide bearing 33a and a cutter portion 33b extending downward from the slide bearing 33a. The slide bearing 33a includes a ball nut which is threadedly engaged with the screw shaft 34, and a guide hole (details thereof are not shown) in which the guide shaft 35 can slide. The slide cutter 33A is threadedly engaged with the right screw portion of the screw shaft 34, and the other slide cutter 33B is threadedly engaged with the left screw portion. With this, the electric motor 36 is driven to rotate the screw shaft 34, thereby moving the pair of slide cutters 33A and 33B in different directions from each other. The slide movement may be carried out using an endless chain, a gear or a moving mechanism instead of the ball screw mechanism.

The operation of the first cutting tool 26 of the embodiment will be explained. First, the standard ply 10P is sent out intermittently at a predetermined pitch. The movable frame 32 is lowered when the standard ply 10P stops, and a tip end of the cutter portion 33b of the slide cutter 33 can pierce at a location which becomes the side line 11e of the center ply portion 11. Then, the electric motor 36 is driven to move the pair of slide cutters 33A and 33B to the outer side in the widthwise direction, and the topping rubber between the carcass cords is cut. With this, the standard ply 10P can be formed with the slits 13. After the slits 13 are formed, the movable frame 32 is moved upward, and the slide cutter 33 is allowed to return to its initial position (position where the tip end of the cutter portion is opposed to the side line 11e of the center ply portion 11). Thereafter, these operations are repeated, and the carcass ply 10 provided with the continuous slits 13 is formed.

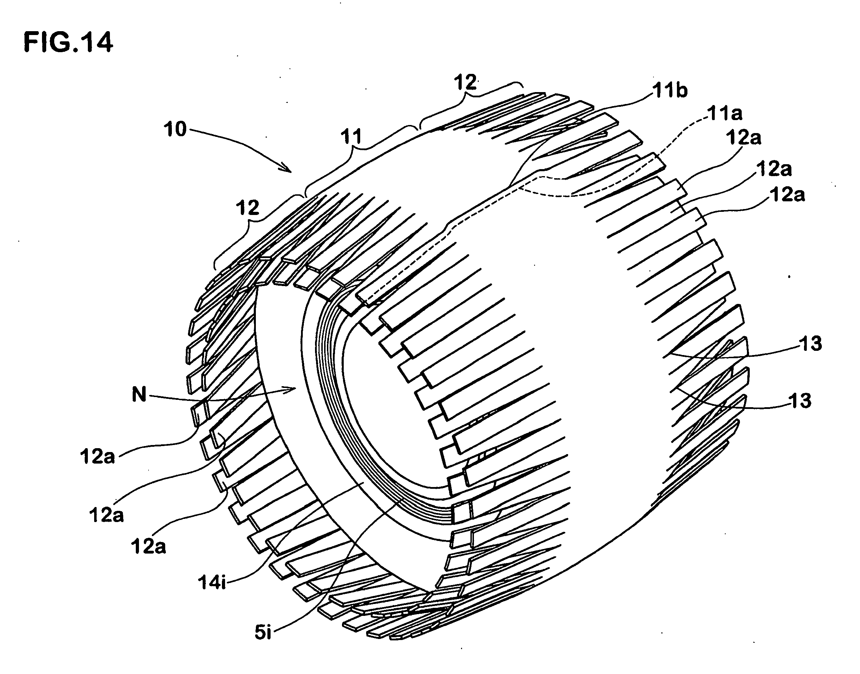

Next, in this embodiment, as shown in Fig. 14, the center plyportion 11 of the carcass ply 10 is wound in the circumferential direction of the tire outside of the shaping body N and in the tread region. A step for lap-jointing the beginning end 11a and the terminating end 11b in the circumferential direction of the tire is carried out. In this embodiment, the inner liner 9 is previously pasted on the outer surface of the shaping body N as described above. Since the variation of the outer diameter is extremely small in the tread region, the center ply portion 11 can be formed in a ring shape and pasted on the outer side of the inner liner 9 without generating a crease. Since the center ply portion 11 is merely wound around the outer side of the shaping body N, large tension force does not act in the circumferential direction when pasted. Therefore, it is possible to prevent the ends of the carcass cord 15 from being largely varied in this procedure.

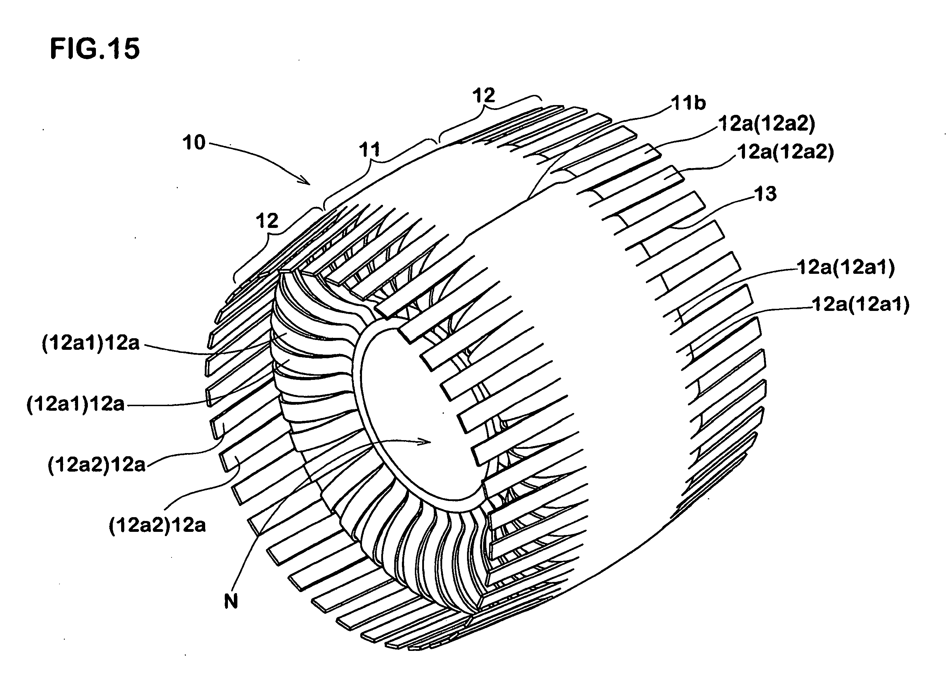

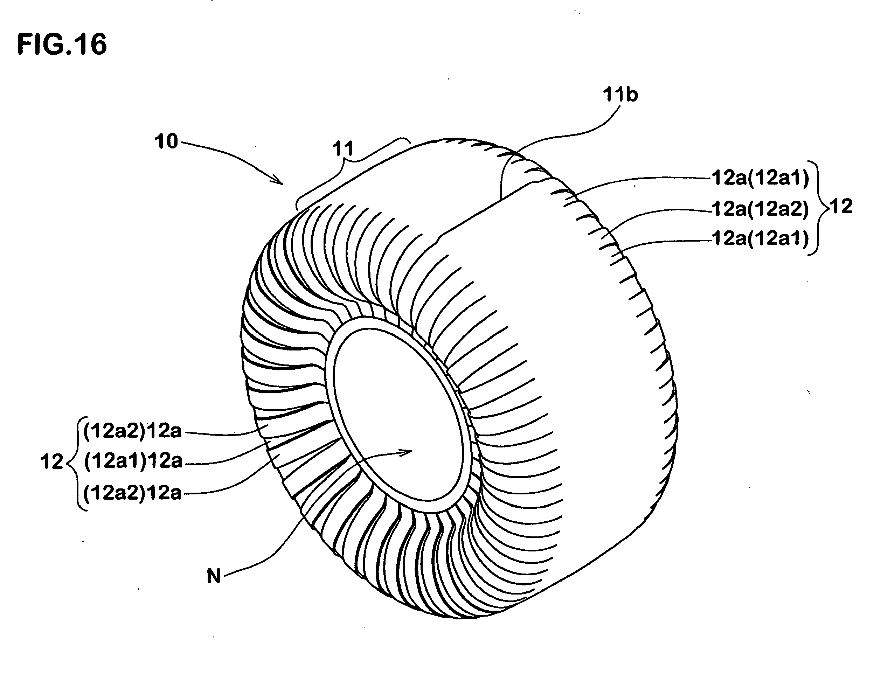

Next, a step for bending the long rectangular pieces 12a radially inward such that the adjacent long rectangular pieces 12a are superposed on each other as shown in Figs. 15 and 16 is carried out. In this embodiment, as shown in Fig. 15, the long rectangular pieces 12a1 of the long rectangular ply portion 12 are bent radially inward prior to the other long rectangular pieces 12a2. Then, as shown in Fig. 16, the long rectangular pieces 12a2 are pasted on the outer surface of the long rectangular pieces 12a1 in the axial direction of the tire which were bent prior to the long rectangular pieces 12a2. Such embodiment is of help in equalizing the rigidity of the side portion 6S of the carcass 6.

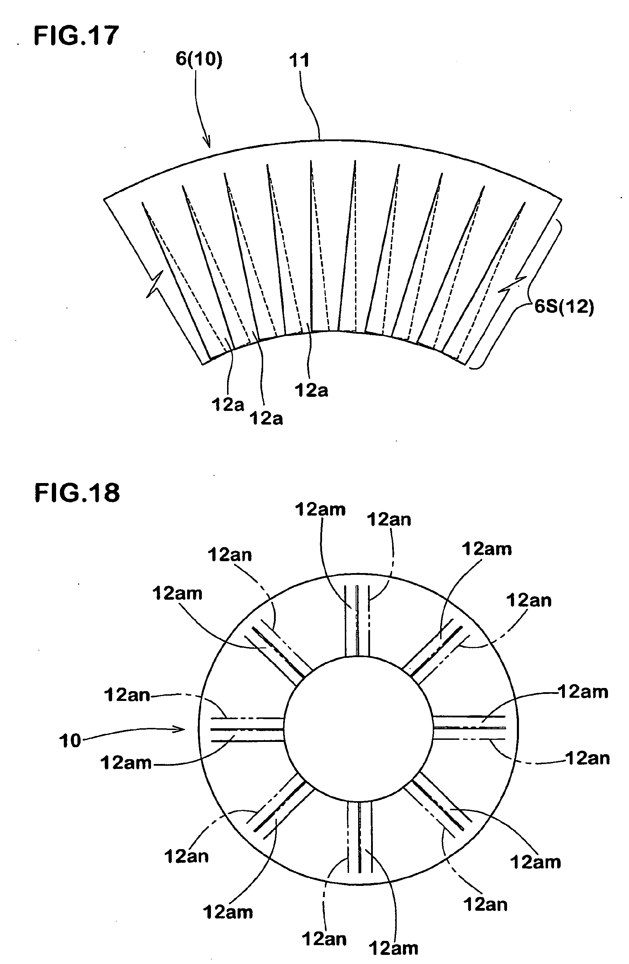

In this step, as described above and as shown in Fig. 17 for example, the long rectangular pieces 12a can also be bent in succession in the circumferential direction such that they are superposed while one side end comes inside and the other side end comes outside. That is, this step may be carried out such that the adjacent long rectangular pieces 12a of the long rectangular ply portion 12 are bent radially inward in succession in the circumferential direction of the tire. At that time, as shown in Fig. 18, in each long rectangular ply portion 12, a plurality of (eight in this example) long rectangular pieces 12am arranged in the circumferential direction of the tire at distances, preferably equal distances from one another are bent radially inward of the tire at the same time, and then, total eight long rectangular pieces 12an which are adjacent to the bent eight long rectangular pieces 12am are bent at the same time. Thereafter, this procedure is repeated. In this case, the productivity is enhanced as compared with a case in which the long rectangular pieces 12a are bent one by one. In addition, the length La of the long rectangular piece 12a in the circumferential direction of the tire is set to a value obtained when the length L of the center ply portion 11 in the circumferential direction of the tire is divided by a multiple of the number of long rectangular pieces 12a which are bent at the same time.

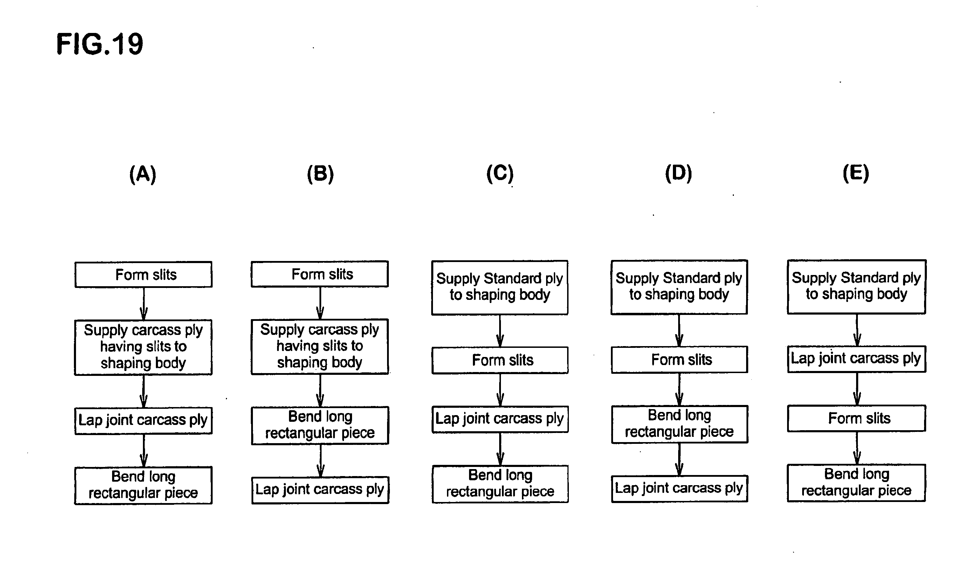

Figs. 19A to 19E show flowcharts of the carcass forming step. The procedure of Fig. 19A is explained in the embodiment. A step shown in Fig. 19B, for bending the long rectangular pieces 12a radially inward may be carried out first and then, the beginning end 11a and the terminating end 11b of the carcass ply 10 may be lap jointed to each other may be carried out after that.

As shown in Figs. 19A and 19B, in the carcass forming step, the carcass ply 10 which is previously formed with the slits 13 is supplied to the shaping body N. Alternatively, as shown in Figs. 19C to 19E, the standard ply 10P which is cut into a predetermined length may be supplied to the shaping body N, and the standard ply 10P may be formed with the slits 13 on the shaping body N.

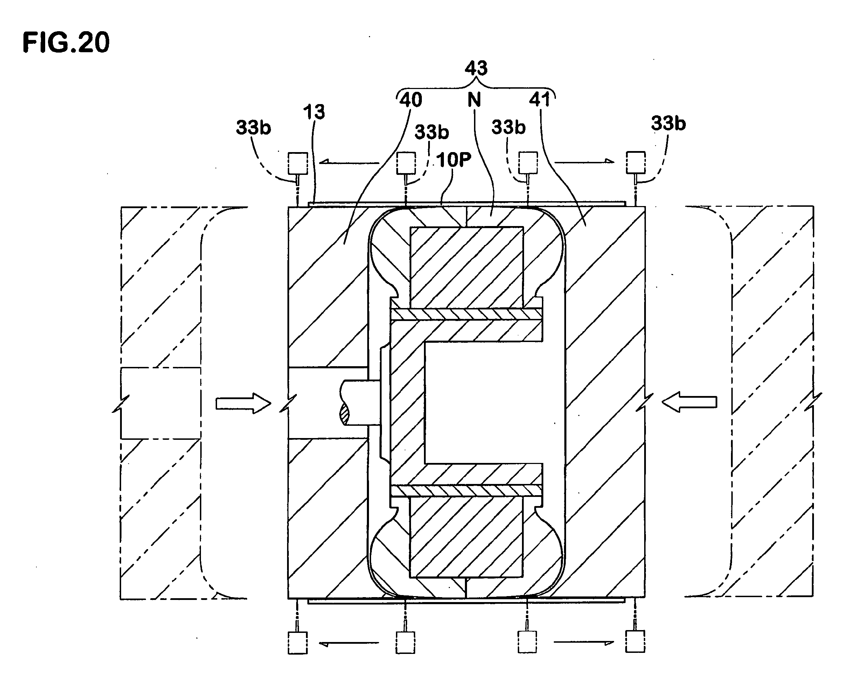

For example, as shown in Fig. 20, a temporary cylindrical ply winding body 43 can be formed by the shaping body N and auxiliary drums 40 and 41 disposed on opposite sides of the shaping body N. The auxiliary drums 40 and 41 have cylindrical surfaces having substantially the same outer diameter as that of the tread surface of the shaping body N. By connecting the outer peripheral surfaces of the auxiliary drums 40 and 41 to opposite sides of the tread surface of the shaping body N, the cylindrical ply winding body 43 having a width greater than that of the standard ply 10P can be formed.

The standard ply 10P can be cylindrically wound around the ply winding body 43, and then, the standard ply 10P can be formed with the slits 13. The slits 13 may be formed by pressing the roller cutters as shown in Fig. 12 against the opposite outer sides of the standard ply 10P while rotating the roller cutters. In Fig. 20, the slits 13 are formed by piercing a needle-like cutter 33b into the topping rubber of the standard ply 10P and sliding the cutter 33b in the axially outside. It is preferable that all of the slits 13 are formed in one procedure by providing a plurality of cutters 33b in the circumferential direction, and moving the cutters 33b axially outward at the same time. This enhances the productivity. In this manner, the slits 13 are provided on the shaping body N to form the carcass ply 10.

Then, as shown in Figs. 19C and 19D, the step for lap jointing the beginning end 11a and the terminating end 11b of the carcass ply 10 to each other and the step for radially inwardly bending the long rectangular pieces 12a are carried out. An order to perform the two steps does not make a difference. As shown in Fig. 19E, the slits 13 may be formed after the beginning end 11a and the terminating end 11b of the standard ply 10P are lap jointed. Although it is not illustrated, when all of the slits 13 are not formed at the same time, it is of course possible to alternately carry out the step for forming the slits 13 and the step for radially inwardly bending the long rectangular pieces 12a.

Next, a toroidal carcass is formed and then, a step for disposing the outer bead core 5o and the outer apex 14o is carried out as shown in Fig. 21. An auxiliary portion 4Gb which is continuous with the base 4a of the clinch rubber 4G is disposed outside in the axial direction of the tire. Further, the cushion rubber CG, the belt layer 7, the sidewall rubber 3G and the tread rubber 2G are disposed. An integrally extruded part may be wound around each rubber material, but when it has a complicated three dimensional shape such as the sidewall rubber 3G, it is preferable that it is formed by the strip wind method.

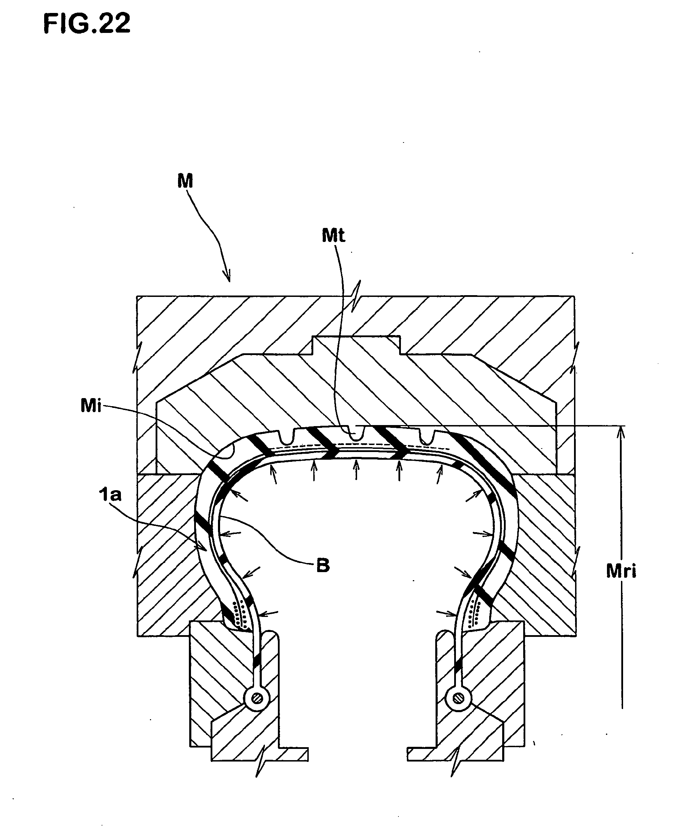

The raw cover 1a is formed on the outer side of the shaping body N. Next, in this embodiment, the shaping body N is taken out from the interior of the raw cover 1a, and the chafer 21 (shown in Figs. 5 and 6) such as canvas is disposed. Then, as shown in Fig. 22, a vulcanization and formation procedure for vulcanizing and forming the raw cover 1a from which the shaping body N is taken out in a vulcanization mold M.

The vulcanization mold M includes a forming surface Mi which comes into contact with an outer surface of the raw cover 1a and which gives a predetermined shape to the outer surface. A known split type mold or the like is used as the vulcanization mold M. A bladder B which can expand and shrink is disposed in the inner surface of the raw cover 1a which is set in the vulcanization mold M. The bladder B comes into contact with the inner surface of the raw cover 1a when expanded, and is strongly pushed against the forming surface Mi to make the vulcanization formation of the tire reliable. With this effect, a stretch is generated in the raw cover 1a in the radial direction and meridian direction.

If the stretch becomes large, the above-described various inconveniences are generated. Therefore, the vulcanization formation step is carried out such that the stretch of the raw cover 1a in the radial direction and/or meridian direction becomes small. With this, also in the vulcanization and formation procedure, the ends of the carcass cord 15 are not varied, and a pneumatic tire which is precisely equalized in the circumferential direction of the tire is produced reliably. Since tension applied to the cord of the belt layer 7 is suppressed to the extremely small value, the angle variation of the belt cords in the vulcanization can be reduced, and the cord angle can be controlled extremely precisely. Therefore, according to the producing method of the embodiment, a pneumatic tire having excellent uniformity can be produced.

It is preferable that the stretch of the raw cover 1a in the radial direction and/or meridian direction at the time of vulcanization formation is 2.0% or lower, more preferably 1.5% or lower, and most preferably 1.0% or lower. The adjustment of the stretch can appropriately be carried out by changing the relative relation between the shape of the outer peripheral surface 22 of the shaping body N and the shape of the forming surface Mi of the vulcanization mold M. That is, if the outer peripheral surface 22 of the shaping body N is reduced relative to the forming surface Mi of the vulcanization mold M, the stretch is increased, and if the outer peripheral surface 22 of the shaping body N is increased relatively, the stretch can be reduced.

The "stretch in the radial direction" can be calculated using the following equation from an inner diameter Ri of a finished tire at a position of the tire equator C in a state in which the internal pressure of 5% is charged, and from an outer diameter Ro at a position of an equator Nc of the shaping body N:

Stretch (%) in the radial direction = {(Ri-Ro)×100}/Ro.

The inner diameter Ri can approximately be obtained by subtracting a distance which is two times of the thickness of the tread of the tire design size from the inner diameter Mri of a portion of the tire equator to be vulcanized out of the forming surface Mi of the vulcanization mold M (a projection Mt for forming a tread groove is not included).

The "stretch in the meridian direction" can be calculated by the following equation from a path length (path length is a so-called periphery length measured along the shape) Li in the meridian direction from one of bead toes of the inner surface of the finished tire in the state where the 5% internal pressure is charged, and from a path length Lo (shown in Fig. 21) of the outer peripheral surface of the shaping body N:

Stretch (%) in the meridian direction = {(Li-Lo)x 100}/Lo.

If the stretch in the meridian direction exceeds 2.0% for example, there is a tendency that variation of ends of the carcass cords 15 and variation and the like of the change of cords at the belt layer 7 are increased, and sufficient enhancement of the uniformity can not be expected. If the stretch in the radial direction exceeds 2.0%, the arrangement of the belt cords and the like are prone to be disarranged when the tread portion is strongly pushed against the projection Mt of the vulcanization mold M for forming the tread groove.

The lower limit of the stretch is 0%. That is, the cross section shape of the finished tire in the state where the 5% internal pressure is charged and the shape of the raw cover 1a may be substantially the same. In the case of the raw cover 1a formed in accordance with the embodiment, the tension of the carcass cord 15 is equalized in the circumferential direction of the tire as compared with the conventional case in which the expanding and deforming step is carried out.

However, since there exist errors in production of the carcass ply 10 and pasting of the carcass ply 10 on the shaping body N, the tension of the carcass cord 15 of the raw cover 1a is not completely equalized on the circumferential direction of the tire. In this meaning, it is preferable that extremely smaller stretch than the conventional stretch is given to the raw cover 1a, and the vulcanization is carried out while uneven tension is equalized. With this, when there is a carcass cord 15 which is loosened on the circumference of the tire, such looseness can be removed at the time of vulcanization. With respect to a carcass cord 15 to which large tension is applied, appropriate slip is allowed to be generated between the carcass cord 15 and the bead core 5 by the stretch. With this, the tension of the carcass cords 15 can be brought more uniform eventually. Further, the disarrangement of the belt cords and the like can be suppressed by applying appropriate tension.

From such a point of view, it is preferable that the shape of the outer peripheral surface 22 of the shaping body N is defined such that the stretch of the raw cover during the vulcanization in the meridian direction and/or radial direction becomes 0.1% or more, more preferably 0.2% or more, and most preferably 0. 3% or more.

In the pneumatic tire 1 of the embodiment, the side line 10E of the carcass ply 10 is terminated without being folded back around the bead core 5. Further, since the stretch during the vulcanization is small, rotation of the bead core in which the bead ring tries to rotate around its cross section is not generated. Therefore, the tire size can be stabilized for this reason also. In the pneumatic tire 1 of the embodiment, in its finished state after the vulcanization, some of the wefts 17 provided on the center ply portion 11 are not cut during the vulcanization and remain. Thus, the ends of the carcass cords are not varied and maintained uniform.

As another embodiment, the raw cover 1a can be vulcanized together with the shaping body N. In this case, a step for removing or transferring the raw cover 1a is unnecessary and thus, deformation of the raw cover 1a which can occur in such a step can be prevented, and this is of help in producing a pneumatic tire having excellent uniformity.

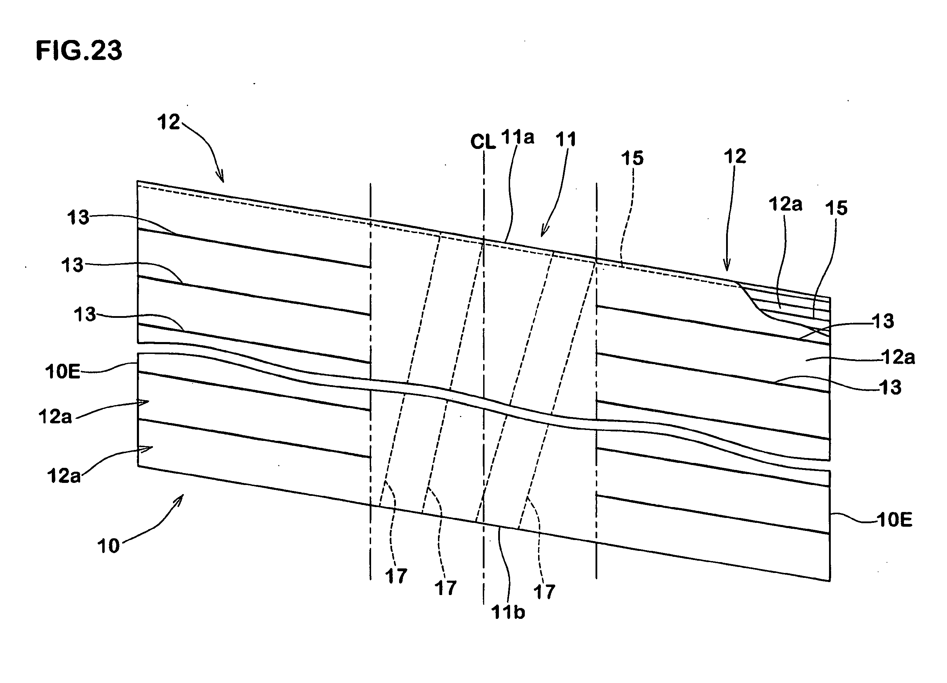

Although the embodiments of the present invention have been explained above, the present invention can be modified and carried out in various modes. For example, the carcass 6 may be formed using two or more carcass plies 10. Moreover, the carcass ply 10 may be formed into a parallelogram shape as shown in Fig. 23. In this case, it is preferable that the carcass cords 15 are arranged in parallel to both side lines of the ply in the circumferential direction of the tire. Further, it is also preferable that the slits 13 are formed in parallel to the carcass cords 15 since the slits 13 are formed between the carcass cords 15. If such a carcass ply 10 is used, it is possible to form a pneumatic tire including a carcass cord having an angle smaller than 90° with respect to the circumferential direction of the tire.

### Examples

Pneumatic tires for a passenger car having size of 175/65R14 were prototyped based on the specification shown in Table 1 while changing the producing methods, and uniformity level of the tires were tested. A conventional example is a tire formed by a conventional producing method having the expanding and deforming procedure of the carcass ply as shown in Fig. 24. A comparative example is a tire formed from a carcass ply in which a band-like strip piece is continuously pasted on an outer side of a core as shown in Fig. 26. In an example tire 1 of the present invention, the long rectangular pieces are inwardly bent alternately and then, the remaining long rectangular pieces are pasted on the outer side as shown in Figs. 14 to 16. An example tire 2 of the present invention includes a carcass in which the long rectangular pieces 12a are inwardly bent in succession as shown in Fig. 17.

Each of the above tires comprises a carcass comprising one carcass ply having carcass cords made of polyester which is inclined at an angle of 90° with respect to the tire equator, and two belt plies made of steel cords. A standard carcass ply having an end in which 50 carcass cords are pounded per 5cm is appropriately worked and used. In the example tires of the invention, the length of the long rectangular piece in the circumferential direction of the tire is 20 mm.

As the uniformity level, a lateral force variation (LFV) and a radial force variation (RFV) were measured under uniformity test conditions of JASO C607:2000. The average value (N) of 20 tires was obtained, and a result thereof is expressed using index in which a value of the conventional example is 100. As the numerical value is smaller, the uniformity level is more excellent.

In the forming time of the raw cover, time required for forming one raw cover was measured, and results thereof are expressed using index in which a value of the conventional example is 100. As the numerical value is smaller, the forming time is more excellent.

The test results and the like are shown in Table 1.

**Table 1**

| | | Conventional Example | Comparative Example | Example 1 | Example 2 |
|---|---|---|---|---|---|
| Producing method (explanatory drawings) | | Fig. 24 | Fig. 26 | Figs. 14 to 16 | Fig. 17 |
| Uniformity | LFV (index) | 100 | 96 | 89 | 88 |
| | RFV (index) | 100 | 95 | 85 | 86 |
| Forming time of raw cover (index) | | 100 | 150 | 110 | 110 |

From the results of the test, it can be confirmed that the uniformity level of each of the example tires of the present invention is enhanced as compared with the conventional example. Concerning the forming time of the raw cover, the example tires bear comparison with the conventional example.

Next, a plurality of kinds of pneumatic tires were prototyped by vulcanizing and forming raw covers formed by the method shown in Figs. 14 to 16 under various conditions in which the stretch is changed, and uniformity thereof was tested. The stretch was adjusted by fixing the forming surface of the vulcanization mold to a constant shape, and changing the shape of the outer peripheral surface of the shaping body. Results thereof are expressed using index in which LFV and RFV of the example tire 3 in which the stretch in the diametrical direction and the radial direction was set to 0 is defined as 100. The results and the like of the test are shown in Table 2.

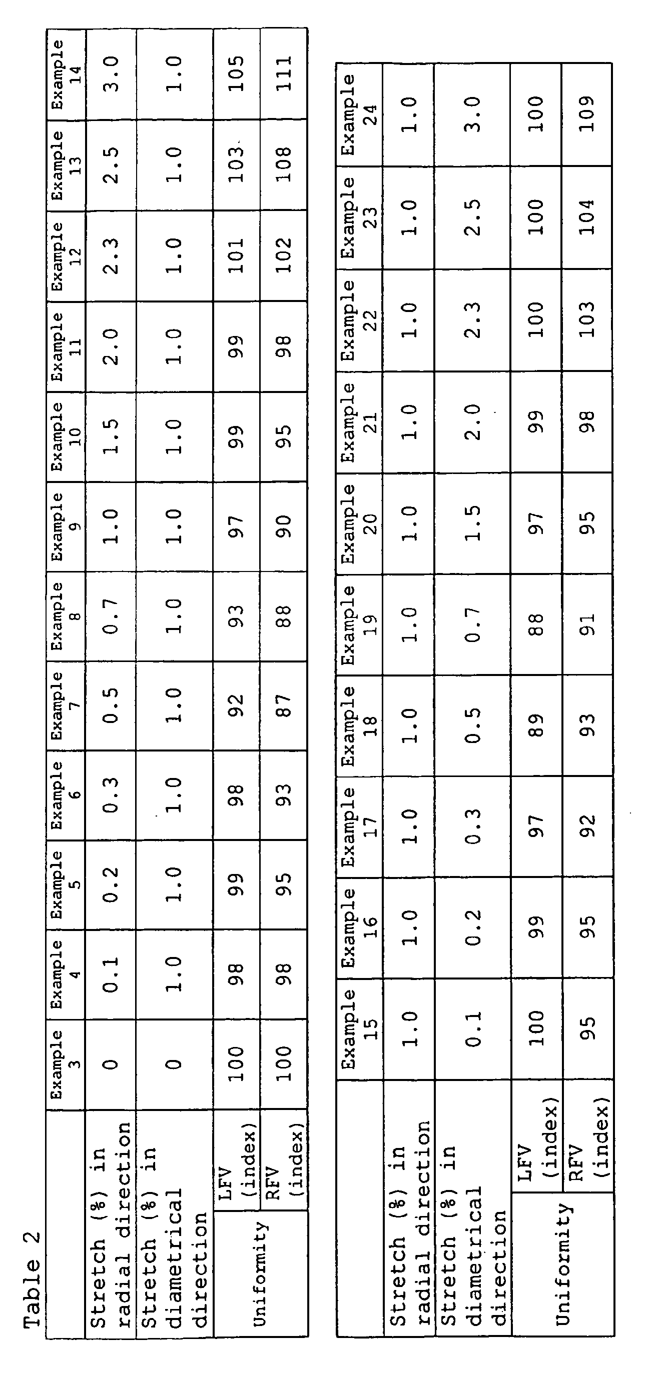

From the test result, it is confirmed that when the stretch is 2.0% or lower, the uniformity level is enhanced more remarkably.

## Claims

1. A pneumatic tire (1) comprising a carcass (6) which extends from a tread portion (2) to bead portions (4) on opposite sides through respective sidewall portions (3) and which uses a carcass ply (10) in which a radially arranged carcass cord array is coated with topping rubber (16), and a tread reinforcing layer (8) including a belt layer (7) disposed inward of the tread portion (2) and radially outward of the carcass (6), wherein
the carcass ply (10) includes a center ply portion (11) which is wound continuously around the tread portion (2) in a circumferential direction of the tire and whose beginning end (11a) and terminating end (11b) in the circumferential direction of the tire are jointed to each other, and long rectangular ply portions (12) on opposite sides of the center ply portion (11),
in each long rectangular ply portion (12), long rectangular pieces (12a) formed by cutting the topping rubber by slits (13) between carcass cords (15) from a side edge of the carcass ply (10) to the center ply portion (11) are arranged in the circumferential direction,
**characterized in that**
said each long rectangular ply portion (12) is bent radially inward in accordance with shape of each sidewall portion (3) in a manner that adjacent long rectangular pieces (12a) are superposed on each other, thereby forming a side portion (6S) of the carcass (6).

2. The pneumatic tire according to claim 1, wherein the center ply portion (11) includes a continuous weft (17) which extends from the beginning end (11a) to the terminating end (11b) in a direction intersecting with the carcass cord (15) at right angles.

3. The pneumatic tire according to one of claims 1 and 2, wherein a length of the long rectangular pieces (12a) in the circumferential direction of the tire is 10 to 30 mm.

4. The pneumatic tire according to one of claims 1 to 3, wherein the long rectangular pieces (12a) include first long rectangular pieces (12a₁) and second long rectangular ply portions pieces (12a₂) that are aligned alternately in the circumferential direction of the tire, and the side portion (6S) of the carcass (6) is formed by bending the first long rectangular pieces (12a₁) radially inward prior to the second long rectangular pieces (12a₂), and by pasting the second long rectangular pieces (12a₂) are stuck on an outer surfaces in the axial direction of the tire of the first long rectangular pieces (12a₁) in every other one.

5. The pneumatic tire according to one of claims 1 to 3, wherein the side portion (6S) of the carcass (6) is formed by bending the long rectangular pieces (12a) radially inward in order, each long rectangular piece (12a) having a portion that overlaps an outer surface in the axial direction of the tire of an adjacent long rectangular piece (12a) that has previously been bent.

6. The pneumatic tire according to one of claims 1 to 5, wherein each bead portion (4) includes a bead core (5) provided at at least one of an inner surface and an outer surface in the axial direction of the tire of each of the long rectangular pieces (12a), the bead core (5) being an inexpansible bead wire (5a) which is wound at least once in the circumferential direction of the tire.

7. A producing method of a pneumatic tire comprising a carcass (6) which extends from a tread portion (2) to bead portions (4) on opposite sides through respective sidewall portions (3) and which uses a carcass ply (10) in which radially arranged carcass cord array is coated with topping rubber (16), and a tread reinforcing layer (8) including a belt layer (7) disposed inward of the tread portion (2) and radially outward of the carcass (6), wherein
the producing method includes a carcass forming procedure for forming a toroidal carcass using a shaping body,
the carcass forming procedure includes:
a step of supplying, to the shaping body, the carcass ply (10) having a center ply portion (11) which is continuous by the topping rubber (16) in the circumferential direction of the tire, and long rectangular ply portions (12) each of which includes long rectangular pieces (12a) formed by cutting the topping rubber (16) by slits (13) between carcass cords (15) from a side edge (10E) of the carcass ply (10) to the center ply portion (11) are arranged along a side of the center ply portion (11) in the circumferential direction;
a step of winding the center ply portion (11) of the carcass ply (10) around a tread region outside of the shaping body in the circumferential direction of the tire, and of lap jointing a beginning end (11a) and a terminating end (11b) of the center ply portion (11) in the circumferential direction of the tire; and
**characterized by** a step of bending each long rectangular piece (12a) of the long rectangular ply portions (12) radially inward in accordance with the shape of each sidewall portion (3) while superposing adjacent long rectangular pieces (12a) on one another, thereby forming a side portion of the carcass.

8. A producing method of a pneumatic tire comprising a carcass (6) which extends from a tread portion (2) to bead portions (4) on opposite sides through respective sidewall portions (3) and which uses a carcass ply (10) in which radially arranged carcass cord array is coated with topping rubber (16), and a tread reinforcing layer including a belt layer (7) disposed inward of the tread portion (2) and radially outward of the carcass (6), wherein
the producing method includes a carcass forming procedure for forming a toroidal carcass using a shaping body,
the carcass forming procedure includes:
a step of supplying the carcass ply (10) to the shaping body;
a step of forming slits (13) which cut the topping rubber (16) between the carcass cords (15) for a predetermined length from opposite side edges (10E) of the carcass ply (10) disposed on the shaping body, thereby forming a center ply portion (11) which is continuous by the topping rubber (16) in the circumferential direction of the tire and a long rectangular ply portions (12) each of which includes long rectangular pieces (12a) formed by the slits (13) and arranged along a side of the center ply portion (11) in the circumferential direction;
a step of winding the center ply portion (11) of the carcass ply (10) around in the circumferential direction of the tire, and of lap jointing a beginning end (11a) and a terminating end (11b) of the center ply portion (11) in the circumferential direction of the tire; and
**characterized by** a step of bending each long rectangular piece (12a) of the long rectangular ply portions (12) radially inward in accordance with the shape of each sidewall portion (3) while superposing adjacent long rectangular pieces (12a) on one another, thereby forming a side portion of the carcass.

9. The producing method of the pneumatic tire according to one of claims 7 and 8, wherein the shaping body has an outer peripheral surface which is close to a tire inner surface shape when 5% internal pressure is charged.

10. The producing method of the pneumatic tire according to one of claims 7 to 9, wherein the shaping body has an outer peripheral surface which is smaller than a tire inner surface shape when 5% internal pressure is charged.

11. The producing method of the pneumatic tire according to one of claims 7 to 10, further including:
a procedure of forming a raw cover including the toroidal carcass on an outer side of the shaping body; and
a vulcanization and formation procedure of vulcanizing and forming, using a vulcanization mold, the raw cover after the shaping body is removed.

12. The producing method of the pneumatic tire according to claim 11, wherein in the vulcanization and formation procedure, the raw cover is vulcanized, with stretch in a radial direction by 0.1% to 2.0%, by expansion of a bladder disposed on the side of an inner surface of the raw cover.

13. The producing method of the pneumatic tire according to one of claims 11 and 12, wherein in the vulcanization and formation procedure, the raw cover is vulcanized, with stretch in a meridian direction by 0.1% to 2.0%, by expansion of a bladder disposed on an inner surface of the raw cover.

## Patentansprüche

1. Luftreifen (1), umfassend eine Karkasse (6), die sich von einem Laufflächenabschnitt (2) zu Wulstabschnitten (4) auf entgegengesetzten Seiten durch jeweilige Seitenwandabschnitte (3) hindurch erstreckt und die eine Karkasslage (10) verwendet, in der eine radial angeordnete Karkasskordanordnung mit einem Gummierungsgummi (16) beschichtet ist, und eine Laufflächenverstärkungsschicht (8) mit einer Gürtelschicht (7), die innerhalb des Laufflächenabschnittes (2) und radial außerhalb der Karkasse (6) angeordnet ist, wobei
die Karkasslage (10) einen zentralen Lagenabschnitt (11), der kontinuierlich um den Laufflächenabschnitt (2) in einer Umfangsrichtung des Reifens gewickelt ist und dessen vorderes Ende (11a) und hinteres Ende (11b) in der Umfangsrichtung des Reifens miteinander verbunden sind, und lange, rechteckige Lagenabschnitte (12) auf entgegengesetzten Seiten des zentralen Lagenabschnittes (11) umfasst, in jedem langen, rechteckigen Lagenabschnitt (12) lange, rechteckige Stücke (12a), die durch Schneiden des Gummierungsgummis durch Schlitze (13) zwischen Karkasskorden (15) von einer Seitenkante der Karkasslage (11) zu dem zentralen Lagenabschnitt (11) gebildet sind, in der Umfangsrichtung angeordnet sind,
**dadurch gekennzeichnet, dass**
jeder lange, rechteckige Lagenabschnitt (12) in Übereinstimmung mit der Form jedes Seitenwandabschnittes (3) radial derart nach innen gebogen ist, dass benachbarte lange, rechteckige Stücke (12a) übereinander gelegt sind, um dadurch einen Seitenabschnitt (6S) der Karkasse (6) zu bilden.

2. Luftreifen nach Anspruch 1, wobei der zentrale Lagenabschnitt (11) einen kontinuierlichen Schussfaden (17) umfasst, der sich von dem vorderen Ende (11a) zu dem hinteren Ende (11b) in einer Richtung erstreckt, die den Karkasskord (15) in rechten Winkeln schneidet.

3. Luftreifen nach Anspruch 1 oder 2, wobei die Länge der langen, rechteckigen Stücke (12a) in der Umfangsrichtung des Reifens 10 bis 30 mm beträgt.

4. Luftreifen nach einem der Ansprüche 1 bis 3, wobei die langen, rechteckigen Stücke (12a) erste lange, rechteckige Stücke (12a₁) und zweite lange, rechteckige Lagenabschnittstücke (12a₂) umfassen, die abwechselnd in der Umfangsrichtung des Reifens ausgerichtet sind, und der Seitenabschnitt (6S) der Karkasse (6) dadurch gebildet ist, dass die ersten langen, rechteckigen Stücke (12a₁) vor den zweiten langen, rechteckigen Stücken (12a₂) radial nach innen gebogen sind und dass durch Kleben die zweiten langen, rechteckigen Stücke (12a₂) auf eine äußere Fläche in der axialen Richtung des Reifens der ersten langen, rechteckigen Stücke (12a₁) bei jedem zweiten geklebt sind.

5. Luftreifen nach einem der Ansprüche 1 bis 3, wobei der Seitenabschnitt (6S) der Karkasse (6) dadurch gebildet ist, dass die langen, rechteckigen Stücke (12a) der Reihe nach radial nach innen gebogen sind, wobei jedes lange, rechteckige Stück (12a) einen Abschnitt aufweist, der eine äußere Fläche in der axialen Richtung des Reifens eines benachbarten langen, rechteckigen Stücks (12a), das zuvor gebogen wurde, überlappt.

6. Luftreifen nach einem der Ansprüche 1 bis 5, wobei jeder Wulstabschnitt (4) einen Wulstkern (5) umfasst, der an mindestens einer von einer inneren Fläche und einer äußeren Fläche in der axialen Richtung des Reifens eines jeden der langen, rechteckigen Stücke (12a) vorgesehen ist, wobei der Wulstkern (5) ein nicht dehnbarer Wulstdraht (5a) ist, der mindestens einmal in der Umfangsrichtung des Reifens gewickelt ist.

7. Verfahren zum Herstellen eines Luftreifens, der eine Karkasse (6) umfasst, die sich von einem Laufflächenabschnitt (2) zu Wulstabschnitten (4) auf entgegengesetzten Seiten durch jeweilige Seitenwandabschnitte (3) hindurch erstreckt und die eine Karkasslage (10) verwendet, in der eine radial angeordnete Karkasskordanordnung mit einem Gummierungsgummi (16) beschichtet ist, und eine Laufflächenverstärkungsschicht (8) mit einer Gürtelschicht (7), die innerhalb des Laufflächenabschnittes (2) und radial außerhalb der Karkasse (6) angeordnet ist, wobei
das Herstellungsverfahren eine Karkassenformprozedur zum Bilden einer torischen Karkasse unter Verwendung eines Formkörpers umfasst,
wobei die Karkassenformprozedur die Schritte umfasst, dass:
die Karkasslage (10), die einen zentralen Lagenabschnitt (11) aufweist, der durch den Gummierungsgummi (16) in der Umfangsrichtung des Reifens kontinuierlich ist, dem Formkörper zugeführt wird und lange, rechteckige Lagenabschnitte (12a), die jeweils lange, rechteckige Stücke (12a) umfassen, die durch Schneiden des Gummierungsgummis (16) durch Schlitze (13) zwischen Karkasskorden (15) von einer Seitenkante (10E) der Karkasslage (10) zu dem zentralen Lagenabschnitt (11) gebildet werden, entlang einer Seite des zentralen Lagenabschnittes (11) in der Umfangsrichtung angeordnet werden;
der zentrale Lagenabschnitt (11) der Karkasslage (10) um ein Laufflächengebiet außerhalb des Formkörpers in der Umfangsrichtung des Reifens gewickelt wird und ein Überlappungsstoß eines vorderen Endes (11a) und eines hinteren Endes (11b) des zentralen Lagenabschnittes (11) in der Umfangsrichtung des Reifens hergestellt wird; und
**gekennzeichnet ist durch** einen Schritt, dass
jedes lange, rechteckige Stück (12a) der langen, rechteckigen Lagenabschnitte (12) in Übereinstimmung mit der Form jedes Seitenwandabschnittes (3) radial nach innen gebogen wird, während benachbarte, lange, rechteckige Stücke (12a) übereinander gelegt werden, um **dadurch** einen Seitenabschnitt der Karkasse zu bilden.

8. Verfahren zum Herstellen eines Luftreifens, der eine Karkasse (6) umfasst, die sich von einem Laufflächenabschnitt (2) zu Wulstabschnitten (4) auf entgegengesetzten Seiten durch jeweilige Seitenwandabschnitte (3) hindurch erstreckt und die eine Karkasslage (10) verwendet, in der eine radial angeordnete Karkasskordanordnung mit einem Gummierungsgummi (16) beschichtet ist, und eine Laufflächenverstärkungsschicht mit einer Gürtelschicht (7), die innerhalb des Laufflächenabschnittes (2) und radial außerhalb der Karkasse (6) angeordnet ist, wobei
das Herstellungsverfahren eine Karkassenformprozedur zum Bilden einer torischen Karkasse unter Verwendung eines Formkörpers umfasst,
wobei die Karkassenformprozedur die Schritte umfasst, dass:
die Karkasslage (10) dem Formkörper zugeführt wird;
Schlitze (13) gebildet werden, die den Gummierungsgummi (16) zwischen den Karkasskorden (15) für eine vorbestimmte Länge von entgegengesetzten Seitenkanten (10E) der Karkasslage (10), die auf dem Formkörper angeordnet ist, schneiden, wodurch ein zentraler Lagenabschnitt (11), der durch den Gummierungsgummi (16) in der Umfangsrichtung des Reifens kontinuierlich ist, und lange, rechteckige Lagenabschnitte (12) gebildet werden, die jeweils lange, rechteckige Stücke (12a), die durch die Schlitze (13) gebildet sind und entlang einer Seite des zentralen Lagenabschnittes (11) in der Umfangsrichtung angeordnet sind, umfassen;
der zentrale Lagenabschnitt (11) der Karkasslage (10) in der Umfangsrichtung des Reifens herum gewickelt wird und ein Überlappungsstoß eines vorderen Endes (11a) und eines hinteren Endes (11b) des zentralen Lagenabschnittes (11) in der Umfangsrichtung des Reifens hergestellt wird; und
**gekennzeichnet durch** einen Schritt, dass
jedes lange, rechteckige Stück (12a) der langen, rechteckigen Lagenabschnitte (12) in Übereinstimmung mit der Form jedes Seitenwandabschnittes (3) radial nach innen gebogen wird, während benachbarte, lange, rechteckige Stücke (12a) übereinander gelegt werden, um **dadurch** einen Seitenabschnitt der Karkasse zu bilden.

9. Verfahren zum Herstellen des Luftreifens nach Anspruch 7 oder 8, wobei der Formkörper eine äußere Umfangsfläche aufweist, die einer inneren Reifenflächenform nahe kommt, wenn 5% Innendruck gefüllt sind.

10. Verfahren zum Herstellen des Luftreifens nach einem der Ansprüche 7 bis 9, wobei der Formkörper eine äußere Umfangsfläche aufweist, die kleiner ist als eine innere Reifenflächenform, wenn 5% Innendruck gefüllt sind.

11. Verfahren zum Herstellen des Luftreifens nach einem der Ansprüche 7 bis 10, ferner umfassend:
eine Prozedur zum Bilden eine Rohhülle, die die torische Karkasse auf eine äußeren Seite des Formkörpers umfasst; und
eine Vulkanisier- und Formprozedur zum Vulkanisieren und Formen der Rohhülle unter Verwendung einer Vulkanisierform, nachdem der Formkörper entfernt ist.

12. Verfahren zum Herstellen des Luftreifens nach Anspruch 11, wobei in der Vulkanisier- und Formprozedur die Rohhülle mit einer Längenzunahme in einer radialen Richtung um 0,1% bis 2,0% durch Ausweiten eines auf der Seite einer inneren Fläche der Rohhülle angeordneten Balgs vulkanisiert wird.

13. Verfahren zum Herstellen des Luftreifens nach Anspruch 11 oder 12, wobei in der Vulkanisier- und Formprozedur die Rohhülle mit einer Längenzunahme in einer Meridianrichtung um 0,1% bis 2,0% durch Ausweiten eines auf einer inneren Fläche der Rohhülle angeordneten Balgs vulkanisiert wird.

## Revendications

1. Pneumatique (1) comprenant une carcasse (6) qui s'étend depuis une portion de bande de roulement (2) jusqu'à des portions de talon (4) sur des côtés opposés, en passant par des portions de paroi latérale respectives (3), et qui utilise un pli de carcasse (10) dans lequel une nappe de fils de carcasse arrangée radialement est revêtue de gomme de caoutchouc (16), et une couche de renfort de bande de roulement (8) comprenant une couche de ceinture (7) disposée à l'intérieur de la portion de bande de roulement (2) et radialement à l'extérieur de la carcasse (6), dans lequel :
le pli de carcasse (10) comprend une portion de pli centrale (11) qui est enroulée en continu autour de la portion de bande de roulement (2) dans un sens de la circonférence du pneumatique, et dont l'extrémité de début (11a) et l'extrémité de fin (11b) dans le sens de la circonférence du pneumatique sont réunies l'une à l'autre, ainsi que de longues portions de pli rectangulaires (12) sur des côtés opposés de la portion de pli centrale (11) ;
dans chaque longue portion de pli rectangulaire (12), de longs éléments rectangulaires (12a) formés en découpant la gomme de caoutchouc en fentes (13) entre des fils de carcasse (15) depuis un bord latéral du pli de carcasse (10) jusqu'à la portion de pli centrale (11), sont arrangés dans le sens de la circonférence,
**caractérisé en ce que** :
ladite chaque longue portion de pli rectangulaire (12) est courbée radialement à l'intérieur en accord avec une forme de chaque portion de paroi latérale (3) de telle manière que de longs éléments rectangulaires adjacents (12a) sont superposés les uns sur les autres, pour former ainsi une portion latérale (6S) de la carcasse (6).

2. Pneumatique selon la revendication 1, dans lequel la portion de pli centrale (11) comprend une trame continue (17) qui s'étend depuis l'extrémité de début (11a) jusqu'à l'extrémité de fin (11b) dans une direction qui coupe les fils de la carcasse (15) à angle droit.

3. Pneumatique selon l'une des revendications 1 et 2, dans lequel une longueur des longs éléments rectangulaires (12a) dans le sens de la circonférence du pneumatique est de 10 mm à 30 mm.

4. Pneumatique selon l'une des revendications 1 à 3, dans lequel les longs éléments rectangulaires (12a) comprennent des premiers longs éléments rectangulaires (12a₁) et des seconds longs éléments de portions de plis rectangulaires (12a₂) qui sont alignés de façon alternée dans le sens de la circonférence du pneumatique, et la portion latérale (6S) de la carcasse (6) est formée en recourbant les premiers longs éléments rectangulaires (12a₁) radialement vers l'intérieur avant les seconds longs éléments de portions de plis rectangulaires (12a₂), et en collant les seconds longs éléments rectangulaires (12a₂) sont collés sur des surfaces extérieures dans la direction axiale du pneumatique des premiers longs éléments rectangulaires (12a₁) une fois sur deux.

5. Pneumatique selon l'une des revendications 1 à 3, dans lequel la portion latérale (6S) de la carcasse (6) est formée en recourbant les longs éléments rectangulaires (12a) radialement vers l'intérieur dans l'ordre, chaque long élément rectangulaire (12a) ayant une portion qui recouvre une surface extérieure dans la direction axiale du pneumatique d'un long élément rectangulaire adjacent (12a) qui a été recourbé auparavant.

6. Pneumatique selon l'une des revendications 1 à 5, dans lequel chaque portion de talon (4) comprend une partie centrale de talon (5) qui est réalisée au niveau d'au moins une d'une surface interne et d'une surface externe dans la direction axiale du pneumatique de chacun des longs éléments rectangulaires (12a), la partie centrale du talon (5) étant un fil de talon non extensible (5a) qui est entouré au moins une fois dans le sens de la circonférence du pneumatique.

7. Procédé de fabrication d'un pneumatique comprenant une carcasse (6) qui s'étend depuis une portion de bande de roulement (2) jusqu'à des portions de talon (4) sur des côtés opposés, en passant par des portions de paroi latérale respectives (3), et qui utilise un pli de carcasse (10) dans lequel une nappe de fils de carcasse arrangée radialement est revêtue de gomme de caoutchouc (16), et une couche de renfort de bande de roulement (8) comprenant une couche de ceinture (7) disposée à l'intérieur de la portion de bande de roulement (2) et radialement à l'extérieur de la carcasse (6), dans lequel :
le procédé de fabrication comprend une procédure de formation de carcasse pour former une carcasse toroïdale en utilisant un corps de façonnage,
la procédure de formation de carcasse comprend :
une étape consistant à monter, sur le corps de façonnage, le pli de carcasse (10) ayant une portion de pli centrale (11) qui est continue par la gomme de caoutchouc (16) dans le sens de la circonférence du pneumatique, et de longues portions de pli rectangulaires (12) qui comprennent chacune de longs éléments rectangulaires (12a) formés en découpant la gomme de caoutchouc (16) en fentes (13) entre des plis de la carcasse (15) depuis un bord latéral (10E) du pli de carcasse (10) jusqu'à la portion de pli centrale (11) sont arrangés le long d'un côté de la portion de pli centrale (11) dans le sens de la circonférence ;
une étape consistant à enrouler la portion de pli centrale (11) du pli de carcasse (10) autour d'une région de bande de roulement à l'extérieur du corps de façonnage dans le sens de la circonférence du pneumatique, et à réunir par chevauchement une extrémité de début (11a) et une extrémité de fin (11b) de la portion de pli centrale (11) dans le sens de la circonférence du pneumatique ; et
**caractérisé par** une étape consistant à recourber chaque long élément rectangulaire (12a) des longues portions de pli rectangulaires (12) radialement vers l'intérieur en accord avec la forme de chaque portion latérale (3) tout en superposant de longs éléments rectangulaires adjacents (12a) les uns sur les autres, pour former ainsi une portion latérale de la carcasse.

8. Procédé de fabrication d'un pneumatique comprenant une carcasse (6) qui s'étend depuis une portion de bande de roulement (2) jusqu'à des portions de talon (4) sur des côtés opposés, en passant par des portions de paroi latérale respectives (3), et qui utilise un pli de carcasse (10) dans lequel une nappe de fils de carcasse arrangée radialement est revêtue de gomme de caoutchouc (16), et une couche de renfort de bande de roulement (7) comprenant une couche de ceinture (2) disposée à l'intérieur de la portion de bande de roulement (6) et radialement à l'extérieur de la carcasse (6), dans lequel :
le procédé de fabrication comprend une procédure de formation de carcasse pour former une carcasse toroïdale en utilisant un corps de façonnage,
la procédure de formation de carcasse comprend :
une étape consistant à monter le pli de carcasse (10) sur le corps de façonnage ;
une étape consistant à former des fentes (13) qui découpent la gomme de caoutchouc (16) entre les fils de la carcasse (15) sur une longueur prédéterminée à partir de bords latéraux opposés (10E) du pli de carcasse (10) disposé sur le corps de façonnage, pour former ainsi une portion de pli centrale (11) qui est continue par la gomme de caoutchouc (16) dans le sens de la circonférence du pneumatique et de longues portions de pli rectangulaires (12) qui comprennent chacune de longs éléments rectangulaires (12a) formés par les fentes (13) et arrangés le long d'un côté de la portion de pli centrale (11) dans le sens de la circonférence ;
une étape consistant à enrouler la portion de pli centrale (11) du pli de carcasse (10) autour dans le sens de la circonférence du pneumatique, et à réunir par chevauchement une extrémité de début (11a) et une extrémité de fin (11b) de la portion de pli centrale (11) dans le sens de la circonférence du pneumatique ; et
**caractérisé par** une étape consistant à recourber chaque long élément rectangulaire (12a) des longues portions de pli rectangulaires (12) radialement vers l'intérieur en accord avec la forme de chaque portion latérale (3) tout en superposant de longs éléments rectangulaires adjacents (12a) les uns sur les autres, pour former ainsi une portion latérale de la carcasse.

9. Procédé de fabrication du pneumatique selon l'une des revendications 7 et 8, dans lequel le corps de façonnage présente une surface de périphérie extérieure qui est proche de la forme d'une surface intérieure du pneumatique quand une pression interne de 5 % est chargée.

10. Procédé de fabrication du pneumatique selon l'une des revendications 7 à 9, dans lequel le corps de façonnage présente une surface de périphérie extérieure qui est plus petite que la forme d'une surface intérieure du pneumatique quand une pression interne de 5 % est chargée.

11. Procédé de fabrication du pneumatique selon l'une des revendications 7 à 10, comprenant par ailleurs :
une procédure pour former une enveloppe brute comprenant la carcasse toroïdale sur un côté extérieur du corps de façonnage ; et
une procédure de vulcanisation et de formation consistant à vulcaniser et à former, en utilisant un moule de vulcanisation, l'enveloppe brute après que le corps de façonnage a été retiré.

12. Procédé de fabrication du pneumatique selon la revendication 11, dans lequel, au cours de la procédure de vulcanisation et de formation, l'enveloppe brute est vulcanisée, par étirement dans une direction radiale de 0,1 % à 2,0 %, par dilatation d'une vessie disposée sur le côté d'une surface intérieure de l'enveloppe brute.

13. Procédé de fabrication du pneumatique selon l'une des revendications 11 et 12, dans lequel, au cours de la procédure de vulcanisation et de formation, l'enveloppe brute est vulcanisée, par étirement dans une direction méridienne de 0,1 % à 2,0 %, par dilatation d'une vessie disposée sur une surface intérieure de l'enveloppe brute.
